# EUROPÄISCHE PATENTSCHRIFT

(11) **EP 3 275 762 B1**
(45) Veröffentlichungstag und Bekanntmachung des Hinweises auf die Patenterteilung: **14.11.2018**
(21) Anmeldenummer: 17179047.0
(22) Anmeldetag: 30.06.2017
(51) Int. Cl.: B61K 9/12, G01B 11/25

(54) **SYSTEM UND VERFAHREN ZUM ERMITTELN VON EIGENSCHAFTEN MINDESTENS EINES RADES EINES SCHIENENFAHRZEUGS**
SYSTEM AND METHOD FOR DETERMINING PROPERTIES OF AT LEAST ONE WHEEL OF A RAIL VEHICLE
SYSTÈME ET PROCÉDÉ DE DÉTERMINATION DE CARACTÉRISTIQUES D'AU MOINS UNE ROUE D'UN VÉHICULE SUR RAILS

(30) Priorität: 27.07.2016 DE 102016113888
(43) Veröffentlichungstag der Anmeldung: 31.01.2018
(73) Patentinhaber: AuE Kassel GmbH, 34123 Kassel (DE)
(72) Erfinder: Nowaczyk, Christian, 34260 Kaufungen (DE)
(74) Vertreter: Patent- und Rechtsanwälte Dr. Solf & Zapf

(56) Entgegenhaltungen:
- EP-A1- 0 617 256
- EP-A2- 0 254 772
- DE-A1- 10 313 191
- US-A- 5 793 492
- US-A1- 2003 072 001
- US-A1- 2007 064 244

## Beschreibung

Die Erfindung betrifft ein System und ein Verfahren zum Ermitteln von Eigenschaften eines Rades und/oder eines Radsatzes eines Schienenfahrzeuges, insbesondere eines geometrischen Ist-Zustandes des Rades und/oder Radsatzes. Das System umfasst mindestens einen ersten Systemteil, der an mindestens einer ersten Schiene eines Gleises angeordnet ist. Der erste Systemteil umfasst mindestens eine erste Messeinheit, die mindestens eine erste elektromagnetische Strahlungsquelle und mindestens eine erste Erfassungseinrichtung aufweist. Die erste Strahlungsquelle ist derart ausgebildet und eingerichtet, insbesondere derart an der Schiene angeordnet, dass mit der ersten Strahlungsquelle ein erstes Muster in mindestens einem ersten Bereich auf ein auf der Schiene stehendes oder auf der Schiene passierenden - also ein auf der Schiene angeordnetes - Rades eines Schienenfahrzeuges projizierbar ist. Das projizierte erste Muster ist ein flächiges, mindestens zweidimensionales Muster. Die erste Erfassungseinrichtung ist derart ausgebildet und eingerichtet, insbesondere derart an der Schiene angeordnet, dass mit der ersten Erfassungseinrichtung das das erste Muster in dem ersten Bereich auf dem Radreifen erfassbar und in digital verarbeitbare Bilddaten umwandelbar ist.

Die Räder eines Schienenfahrzeuges unterliegen durch die Beanspruchung im Betriebseinsatz einem Verschleiß bzw. einer Schädigung und Abnutzung. Das Verschleißverhalten eines Rades eines Schienenfahrzeuges wird dabei beispielsweise durch die Laufleistung, insbesondere in Abhängigkeit von der Streckencharakteristik, die Aufstandskraft pro Rad sowie die Antriebs- und Bremskräfte beeinflusst. Neben Dauerbelastungen, die beispielsweise zu einer plastischen Verformung im Bereich der Lauffläche führen, sind auch Einzelereignisse wie starke Bremsungen für den Verschleiß verantwortlich. Während bei Eisenbahnen insbesondere die Lauffläche beansprucht wird, ist beispielsweise bei Straßenbahnen aufgrund der engen Kurvenradien im Fahrbetrieb insbesondere der Radkranz von Verschleiß betroffen.

Die Abnutzung oder Verformung der Räder eines Schienenfahrzeuges ist innerhalb vorbestimmter Grenzbereiche akzeptabel und muss daher regelmäßig kontrolliert werden. Die Planung der Instandhaltung von Rädern und Radsätzen von Schienenfahrzeugen setzt daher eine möglichst genaue Kenntnis des tatsächlichen Verschleißverhaltens voraus, um nicht erforderliche Wartungen oder Reparaturen zu vermeiden, gleichzeitig aber Schädigungen und Verschleiß frühzeitig zu erkennen. Dazu wird jedes einzelne Rad einer regelmäßigen Überprüfung unterzogen, deren Intervalle oftmals anhand der Laufleistung festgelegt sind, ohne aber die tatsächliche Beanspruchung zu berücksichtigen.

Um den Aufwand für eine regelmäßige Erfassung der aktuellen Eigenschaften eines Rades zu reduzieren, haben sich in der Praxis automatische Systeme als vorteilhaft erwiesen, die die Oberfläche eines Rades beispielsweise optisch erfassen. Im Stand der Technik sind dazu eine Vielzahl von unterschiedlichen Systemen mit variierender Präzision bekannt.

DE 10 2012 207 427 A1 offenbart beispielsweise ein Verfahren zur optischabtastenden Prüfung einer Lauffläche eines Rades eines Zuges. Zur Erfassung ist die eine Kamera derart angeordnet, dass die auf einer Schiene abrollende Lauffläche des Rades über ihren gesamten Umfang durch Anpassung der Schärfentiefe der Kamera optisch erfasst und diese anschließend analysiert wird.

EP 1 992 167 B1 offenbart ein Verfahren zur Messung von Eigenschaften von Rädern eines Schienenfahrzeuges, bei dem im Gleis eine Referenzmarkierung angeordnet ist, die zusätzlich zu dem zu erfassenden Rad von einer Bilderfassungsvorrichtung des Systems erkannt wird.

EP 0 617 256 A1 offenbart ein Verfahren zur Ermittlung eines Durchmessers einer Umfangslinie an Rädern von Radsätzen sowie eine Einrichtung zur Durchführung des Verfahrens. Die Messung erfolgt mittels einer Referenzlinie am Rad und mittels der Referenzlinie erfolgten Lichtschnitten an drei Stellen auf dem Umfang des Rades.

Die aus dem Stand der Technik bekannten Systeme und Verfahren weisen allerdings den Nachteil auf, dass die Erfassung der Oberfläche eines Rades eines Schienenfahrzeuges nicht mit ausreichender Genauigkeit erfolgt.

Der Erfindung liegt deshalb die Aufgabe zu Grunde, ein System und ein Verfahren zur Ermittlung von Eigenschaften eines Rades und/oder eines Radsatzes eines Schienenfahrzeuges anzugeben, bei dem die Genauigkeit der ermittelten Eigenschaften des Rades und/oder des Radsatzes im Vergleich zu aus dem Stand der Technik bekannten Systemen und/oder Verfahren gesteigert ist.

Die vorgenannte Aufgabe ist bei einem gattungsgemäßen System zur Ermittlung von Eigenschaften eines Rades eines Schienenfahrzeuges dadurch gelöst, dass die erste Messeinheit mindestens eine weitere, nämlich eine zweite Erfassungseinrichtung umfasst, und dass die zweite Erfassungseinrichtung derart ausgebildet und eingerichtet ist, dass mit der zweiten Erfassungseinrichtung das erste Muster in dem ersten Bereich auf dem Radreifen erfasst wird. Die zweite Erfassungseinrichtung ist zum Erfassen des ersten Musters in dem ersten Bereich auf dem Radreifen eingerichtet.

Das System umfasst mindestens einen ersten Systemteil, der an mindestens einer Schiene eines Gleises angeordnet ist. Das Gleis umfasst zwei im Wesentlichen parallel verlaufende Schienen, wobei ein passierendes Schienenfahrzeug mit den beiden Rädern eines Radsatzes auf jeweils einer der Schienen geführt wird. Der erste Systemteil ist beispielsweise an einer Montageplatte befestigt, die unter der Schiene hindurchtritt und mit zwei Spannplatten am Schienenfuß verschraubt ist. Auf jeder Seite der Schiene ist jeweils eine Spannplatte angeordnet, die insbesondere mit Gewinden innerhalb der Montageplatte zusammenwirkt.

Der erste Systemteil umfasst mindestens eine erste Messeinheit, wobei die erste Messeinheit mindestens eine erste elektromagnetische Strahlungsquelle und mindestens eine erste Erfassungseinrichtung aufweist. Die erste Strahlungsquelle ist derart ausgebildet und eingerichtet, nämlich so an der Schiene des Gleises angeordnet, dass mit der ersten Strahlungsquelle ein erstes Muster in mindestens einem ersten Bereich auf ein auf der Schiene stehendes oder auf der Schiene passierendes, also auf der Schiene angeordnetes, Rad eines Schienenfahrzeuges projizierbar ist. Die erste Strahlungsquelle ist zum Projizieren eines ersten Musters in dem ersten Bereich auf dem ersten Rad eingerichtet. Dabei ist es für die Funktionsweise des Systems nicht von Bedeutung, ob sich das Rad in Ruhe befindet oder bewegt wird; das System funktioniert in beiden Fällen. Das System ist insbesondere dazu ausgebildet die Eigenschaften eines passierenden Rades in einem Geschwindigkeitsbereich zwischen 0,5 km/h und 100 km/h, insbesondere zwischen 5 km/h und 15 km/h, zu erfassen.

Dadurch, dass die erste Strahlungsquelle in einer festen Position relativ zur Schiene angeordnet ist, ist die Projektionsrichtung der ersten Strahlungsquelle bekannt, so dass die erste Strahlungsquelle derart ausgerichtet werden kann, dass ein erstes Muster in mindestens einem ersten Bereich auf ein auf der Schiene stehendes oder passierendes - angeordnetes - erstes Rad eines Schienenfahrzeuges projizierbar ist.

Die elektromagnetischen Strahlungsquellen des Systems, insbesondere die erste Strahlungsquelle, sind beispielsweise als Laser ausgebildet. Vorzugsweise umfasst die Strahlungsquelle neben einer Laserdiode für den Laser mindestens eine Linse, um den Laserstrahl aufzuweiten. Die Strahlungsquelle ist so ausgebildet, dass mit der Strahlungsquelle ein Muster projizierbar ist. Bei dem Laser handelt es sich insbesondere um einen Laser im Bereich des für Menschen sichtbaren Lichts, also im Bereich einer Wellenlänge zwischen etwa 380 nm und 780 nm. Dies entspricht Frequenzen von etwa 789 THz bis 384 THz.

Der Laserstrahl wird aufgeweitet, um eine flächige, zweidimensionale Projektion, beispielsweise im ersten Bereich, zu erhalten. Alternativ oder zusätzlich ist bei der Strahlungsquelle ferner eine Linse mit Muster und/oder eine separate Musterblende vorgesehen. Die Linse mit Muster bzw. die Musterblende dient der Erzeugung des zu projizierenden Musters, insbesondere des ersten Musters, auf dem Rad.

Das Muster ist ein mindestens zweidimensionales, flächiges Muster, also beispielsweise ein Gitter, eine Punktewolke, sich überschneidende Kreise oder sich überschneidende andere geometrische Formen, sowie jedes Muster, das zur Projektion auf ein Rad geeignet ist.

Das Muster wird durch die erste Strahlungsquelle mindestens zu dem Zeitpunkt, in dem das auf der Schiene angeordnete - stehende - oder passierende Rad eines Schienenfahrzeugs an einer bestimmten, definierten Position ist, auf einen festgelegten ersten Bereich auf dem Rad projiziert. Die erste Strahlungsquelle ist dabei in einem vorbestimmten Winkel - schräg - zum Rad angeordnet, so dass das flächige, zweidimensionale Muster auf der dreidimensionalen Oberfläche des Rades verzerrt wird.

Das im ersten Bereich auf dem Rad abgebildete - verzerrte - Muster wird von der ersten Erfassungseinrichtung erfasst und einer Auswerteeinheit mit einer Datenbank zugeleitet. Aus der Verzerrung des im ersten Bereich abgebildeten Musters gegenüber der bekannten - projizierten - Sollform des Musters lässt sich die Form der Oberfläche des Rades berechnen. Da die Stellwinkel der Erfassungseinrichtung zur Schiene und/oder zum Rad und/oder zum ersten Bereich bekannt sind, lässt sich die Oberfläche beispielsweise mittels einer Triangulation mit mehreren Punkten bestimmen.

Die erste Erfassungseinrichtung ist dazu derart ausgebildet und eingerichtet, dass das erste Muster in dem ersten Bereich auf dem Rad mit der ersten Erfassungseinrichtung erfassbar ist. Die erste Erfassungseinrichtung ist zum Erfassen des ersten Musters in dem ersten Bereich auf dem ersten Rad ausgebildet. Dazu ist die Erfassungseinrichtung so ausgebildet, dass sie die von dem Rad reflektierte elektromagnetische Strahlung in dem Frequenzbereich der Strahlungsquelle in einen digital weiterverarbeitbaren bzw. auswertbaren Bilddatensatz umwandelt.

Die erste Messeinheit umfasst ferner mindestens eine zweite Erfassungseinrichtung, die derart ausgebildet und eingerichtet ist, nämlich derart an der Schiene befestigt ist, dass mit der zweiten Erfassungseinrichtung das erste Muster in dem ersten Bereich auf dem auf der Schiene stehenden oder passierenden Rad erfassbar ist. Die zweite Erfassungseinrichtung ist folglich derart an der Schiene des Gleises angeordnet, beispielsweise an der Montageplatte befestigt, dass die zweite Erfassungseinrichtung ebenfalls den ersten Bereich auf dem Rad erfassen kann, um einen weiteren - zweiten - Bilddatensatz des ersten Bereiches zu erzeugen.

Die erste Erfassungseinrichtung und die zweite Erfassungseinrichtung sind derart an der Schiene angeordnet, dass sie den ersten Bereich auf dem passierenden Rad und damit auch das in dem ersten Bereich projizierte Muster aus unterschiedlichen Winkeln erfassen, insbesondere zum gleichen Zeitpunkt - dem Auslösezeitpunkt. Da die Anordnung der ersten Erfassungseinrichtung und der zweiten Erfassungseinrichtung relativ zur Schiene bekannt ist, können diese geometrischen Daten der Auswerteeinheit zugeführt und bei der Auswertung der Bilddaten berücksichtigt werden.

Das System umfasst vorzugsweise eine Auswerteeinheit, die beispielsweise als Computersystem ausgebildet ist. Die Auswerteeinheit ist beispielweise mittels Lichtwellenleitern mit der Messeinheit verbunden. Die Auswerteeinheit umfasst insbesondere eine Datenbank in der die erfassten Daten abspeicher- und abrufbar sind. Die Auswerteeinheit ist so eingerichtet, dass sie den ersten Bilddatensatz der ersten Erfassungseinrichtung des ersten Bereichs und den zweiten Bilddatensatz der zweiten Erfassungseinrichtung des ersten Bereichs stereoskopisch auswertet. Der erste Bilddatensatz und der zweite Bilddatensatz werden also unter Heranziehung der geometrischen Anordnung der Erfassungseinrichtungen relativ zur Schiene und/oder zum Rad korrelativ ausgewertet und/oder verglichen, um ein sehr genaues Modell der aktuellen Oberfläche des Rades, insbesondere der Lauffläche, zu erhalten. Aus diesen Daten ermittelt die Auswerteeinheit beispielsweise Materialverschiebungen im Bereich der Lauffläche und weiteren Verschleißerscheinungen des Rades. Vorzugsweise werden die aktuell ermittelten Daten dazu beispielsweise mit bekannten Daten aus der Datenbank verglichen, beispielsweise solchen, die zu einem anderen - früheren - Zeitpunkt von dem gleichen Rad erfasst worden sind.

Vorzugsweise sind zumindest die erste elektromagnetische Strahlungsquelle, die erste Erfassungseinrichtung und die zweite Erfassungseinrichtung der ersten Messeinheit in einem gemeinsamen ersten Gehäuse angeordnet. Vorzugsweise ist mindestens die erste elektromagnetische Strahlungsquelle eine Laserdiode mit davor angeordnetem Linsensystem zur Erzeugung einer aufgeweiteten Projektion und des Musters. Die Strahlungsquelle ist in dem ersten Gehäuse vorzugsweise zwischen der ersten Erfassungseinrichtung und der zweiten Erfassungseinrichtung angeordnet.

Die erste elektromagnetische Strahlungsquelle, die erste Erfassungseinrichtung und die zweite Erfassungseinrichtung sind vorzugsweise derart ausgerichtet, dass der erste Bereich zumindest einen Teil der Lauffläche sowie zumindest einen Teil des Radkranzes des Rades umfasst. Das erste Muster wird folglich zumindest auf einen Teil der Lauffläche sowie zumindest auf einen Teil des Radkranzes des Rades projiziert.

Die Erfassungseinrichtungen, insbesondere die erste Erfassungseinrichtung und die zweite Erfassungseinrichtung, sind beispielsweise als Kameras ausgebildet, die insbesondere die von dem Rad reflektierte Strahlung, insbesondere das erste Muster, der ersten Strahlungsquelle erfassen können. Der Wellenlängenbereich der ersten Strahlungsquelle ist dazu auf den erfassbaren Wellenlängenbereich der ersten Erfassungseinrichtung und der zweiten Erfassungseinrichtung abgestimmt.

Es ist zudem ferner vorgesehen, dass das System mindestens eine Ausleseeinheit für einen Rad-Transponder, z.B. für einen RFID-Chip oder einen Barcode, und/oder eine Radlasterfassungseinheit zur Messung der Radlast des Rades und/oder eine Schwingungsüberwachungseinheit zur Erfassung von Schwingungen des Rades umfasst

Die erste Messeinheit ist vorzugsweise derart eingerichtet, dass eine Projektion eines ersten Musters mit der ersten elektromagnetischen Strahlungsquelle sowie eine Erfassung des ersten Musters mit der ersten Erfassungseinrichtung sowie mit der zweiten Erfassungseinrichtung gleichzeitig mindestens zu einem Auslösezeitpunkt erfolgt. Die erste Messeinheit weist mindestens ein Mittel auf, mit dem eine Projektion eines ersten Musters mit der ersten elektromagnetischen Strahlungsquelle sowie eine Erfassung des ersten Musters mit der ersten Erfassungseinrichtung sowie mit der zweiten Erfassungseinrichtung gleichzeitig mindestens zu einem Auslösezeitpunkt auslösbar ist. Der Auslösezeitpunkt wird durch den Zeitpunkt bestimmt, an dem das passierende oder stehende Rad eines Schienenfahrzeuges sich an der Position auf der Schiene befindet, auf die die erste Strahlungsquelle, die ersten Erfassungseinrichtung und die zweite Erfassungseinrichtung ausgerichtet sind, um dort durch die Projektion den ersten Bereich zu erzeugen.

Durch die doppelte Erfassung des ersten Musters im ersten Bereich durch eine erste Erfassungseinrichtung und durch eine zweite Erfassungseinrichtung kann im Rahmen der Auswertung die Genauigkeit der Berechnung der Eigenschaften des Rades deutlich gesteigert werden.

Insbesondere um die Messgenauigkeit des Systems weiter zu steigern, ist gemäß einer ersten Ausgestaltung vorgesehen, dass der erste Systemteil eine zweite Messeinheit für einen zweiten Bereich auf dem Rad und/oder eine dritte Messeinheit für einen dritten Bereich auf dem Rad umfasst.

Die zweite Messeinheit und/oder die dritte Messeinheit sind vorzugsweise identisch wie die erste Messeinheit ausgebildet und eingerichtet. Die erste Messeinheit, die zweite Messeinheit und die dritte Messeinheit sind - sofern vorhanden - auf unterschiedliche Bereiche auf dem Rad ausgerichtet. Die erste Messeinheit auf den ersten Bereich, die zweite Messeinheit auf einen zweiten Bereich und die dritte Messeinheit auf einen dritten Bereich des Rades. Jede Messeinheit, also die erste Messeinheit, die zweite Messeinheit und die dritte Messeinheit, umfasst mindestens eine erste elektromagnetische Strahlungsquelle zur Projektion eines Musters, eine erste Erfassungseinrichtung und eine zweite Erfassungseinrichtung.

Bevorzugt ist jede Messeinheit so eingerichtet, dass zu einem Auslösezeitpunkt gleichzeitig eine Projektion eines Musters in den entsprechenden Bereich sowie die Erfassung mit der jeweiligen ersten Erfassungseinrichtung und der zweiten Erfassungseinrichtung erfolgt. Die erste Erfassungseinrichtung und die zweite Erfassungseinrichtung einer Messeinheit sind in unterschiedlichen Winkeln derart auf den der Messeinheit zugeordneten Bereich ausgerichtet, dass mit beiden Erfassungseinheiten eine Erfassung des in diesem Bereich projizierten Musters möglich ist. Vorteilhaft sind der erste Bereich, der zweite Bereich und der dritte Bereich überschneidungsfrei.

Bei einer bevorzugten Ausgestaltung mit drei Messeinheiten ist folglich vorgesehen, dass die erste Messeinheit mindestens eine erste elektromagnetische Strahlungsquelle, mindestens eine erste Erfassungseinrichtung und mindestens eine zweite Erfassungseinrichtung aufweist. Mit der ersten elektromagnetischen Strahlungsquelle ist ein erstes Muster in mindestens einen ersten Bereich auf ein stehendes oder passierendes Rad projizierbar. Die zweite Messeinheit umfasst mindestens eine zweite elektromagnetische Strahlungsquelle, mindestens eine dritte Erfassungseinrichtung und mindestens eine vierte Erfassungseinrichtung, wobei mit der zweiten Strahlungsquelle ein zweites Muster in mindestens den zweiten Bereich auf das auf der Schiene stehende oder passierende Rad projizierbar ist. Die dritte Messeinheit umfasst mindestens eine dritte elektromagnetische Strahlungsquelle, mindestens eine vierte Erfassungseinrichtung sowie mindestens eine fünfte Erfassungseinrichtung, wobei mit der dritten Strahlungsquelle ein drittes Muster in mindestens dem dritten Bereich auf das auf der Schiene passierende oder stehende Rad projizierbar ist.

Vorzugsweise sind das erste Muster und/oder das zweite Muster und/oder das dritte Muster identisch. Es ist auch vorgesehen, dass das erste Muster und/oder das zweite Muster und/oder das dritte Muster unterschiedlich sind.

Vorteilhaft ist die erste Messeinheit in einem ersten Gehäuse, die zweite Messeinheit in einem zweiten Gehäuse und die dritte Messeinheit in einem dritten Gehäuse angeordnet. Wie bereits zur ersten Strahlungsquelle ausgeführt, sind die elektromagnetischen Strahlungsquellen vorzugsweise als Laser ausgebildet. Beispielsweise sind die zweite Strahlungsquelle und die dritte Strahlungsquelle identisch wie die erste Strahlungsquelle ausgebildet, umfassen also auch beispielweise mindestens eine Linse und/oder eine Musterblende etc.

Besonders bevorzugt ist vorgesehen, dass der erste Bereich der ersten Messeinheit zumindest einen Teil der Lauffläche sowie einen Teil des Radkranzes des Rades umfasst. Insbesondere ist der erste Bereich auf einer ersten Hälfte des Umfangs des Rades angeordnet, insbesondere der der Bewegungsrichtung abgewandten Hälfte des Umfangs. Ferner ist vorzugsweise vorgesehen, dass der zweite Bereich der zweiten Messeinheit zumindest einen Teil der Lauffläche des Rades sowie einen Teil des Radkranzes des Rades umfasst. Insbesondere ist der zweite Bereich auf einer zweiten Hälfte des Umfangs des Rades angeordnet, insbesondere der der Bewegungsrichtung zugewandten Hälfte des Umfangs. Weiter ist bevorzugt vorgesehen, dass der dritte Bereich der dritten Messeinheit zumindest einen Teil der inneren Radflanke sowie einen Teil des Radkranzes umfasst.

Gemäß einer weiteren Ausgestaltung des Systems ist bevorzugt vorgesehen, dass die erste Messeinheit und die zweite Messeinheit auf einer ersten Seite einer Schiene und die dritte Messeinheit auf einer zweiten Seite der Schiene angeordnet sind, wobei insbesondere die zweite Seite die Innenseite der Schiene ist. Die Innenseite der Schiene ist dabei der Teil der Schiene, der in einem Gleis der zweiten, parallel verlaufenden Schiene zugeordnet ist. Folglich ist die dritte Messeinheit zwischen der ersten Schiene und der zweiten Schiene eines Gleises angeordnet.

Dadurch, dass die dritte Messeinheit vorzugsweise mit ihrem dritten Bereich zumindest einen Teil der inneren Radflanke erfasst, ist mit dem Bilddatensatz der dritten Messeinheit die Radlage relativ zur Schiene oder die Achslage des Radsatzes relativ zur Schiene bestimmbar.

Um die Erfassungsgenauigkeit für die Oberfläche des Rades weiter zu steigern, ist gemäß einer weiteren Ausgestaltung vorgesehen, dass der erste Systemteil derart eingerichtet ist, dass die Projektion und Erfassung mindestens gleichzeitig mit der ersten Messeinheit und/oder mit der zweiten Messeinheit und/oder mit der dritten Messeinheit erfolgt. Das System weist mindestens ein Mittel auf, mit dem die Projektion und Erfassung mindestens gleichzeitig mit der ersten Messeinheit und/oder mit der zweiten Messeinheit und/oder mit der dritten Messeinheit auslösbar ist. Im bevorzugten Ausführungsbeispiel mit drei Messeinheiten wird folglich zu einem Auslösezeitpunkt gleichzeitig im ersten Bereich, im zweiten Bereich und im dritten Bereich auf dem Rad jeweils ein Muster projiziert sowie das jeweilige Muster mit jeweils zwei Erfassungseinrichtungen erfasst und die erzeugten Bilddatensätze einer Auswerteeinheit zugeleitet. Mit der Auswerteeinheit lassen sich auf Basis der so gewonnen Daten sehr präzise die Eigenschaften des Rades sowie unter anderem die Lage des Rades relativ zur Schiene berechnen.

Die vorliegende Erfindung hat gegenüber dem Stand der Technik den Vorteil, dass ein in den jeweiligen Bereich projiziertes Muster stets mit zwei Erfassungseinrichtungen erfasst wird, wodurch die Genauigkeit der Daten und damit die Kenntnis über die aktuellen geometrischen Eigenschaften des Rades und des Verschleißzustand gesteigert wird.

Die Genauigkeit des Systems lässt sich gemäß einer weiteren Ausgestaltung dadurch weiter steigern, dass die erste Messeinheit und/oder die zweite Messeinheit und/oder die dritte Messeinheit mindestens eine weitere elektromagnetische Strahlungsquelle aufweist/aufweisen, und dass mit der weiteren Strahlungsquelle elektromagnetische Strahlung, bei der ersten Messeinheit in den ersten Bereich, bei der zweite Messeinheit in den zweiten Bereich und bei der dritten Messeinheit in den dritten Bereich, auf das Rad projizierbar ist.

Es ist folglich vorgesehen, dass jede Messeinheit, also die erste Messeinheit und/oder die zweite Messeinheit und/oder die dritte Messeinheit, zusätzlich zu der jeweils ersten elektromagnetischen Strahlungsquelle zur Projektion eines Musters eine weitere elektromagnetische Strahlungsquelle aufweist/aufweisen, mit der elektromagnetische Strahlung in den jeweiligen Bereich, der der jeweiligen Messeinheit zugeordnet ist, projizierbar ist. Die elektromagnetische Strahlung der weiteren Strahlungsquelle kann beispielsweise zur Beleuchtung des jeweiligen Bereichs, insbesondere zum Auslösezeitpunkt, ausgebildet sein.

Ferner ist auch vorgesehen, dass mit der weiteren Strahlungsquelle jeweils ein weiteres Muster in den jeweiligen Bereich projizierbar ist. Dazu umfasst die weitere Strahlungsquelle, identisch wie auch die erste Strahlungsquelle, beispielsweise eine Linse zur Aufweitung und/oder eine Linse mit Muster und/oder eine Musterblende.

Bei der bevorzugten Ausgestaltung mit drei Messeinheiten umfasst beispielsweise die erste Messeinheit eine zweite Strahlungsquelle, die dritte Messeinheit eine vierte Strahlungsquelle sowie die dritte Messeinheit eine sechste Strahlungsquelle.

Gemäß einer weiteren Ausgestaltung des Systems ist vorgesehen, dass mindestens eine Strahlungsquelle im System als Infrarotlaser ausgebildet ist. Bevorzugt ist vorgesehen, dass alle Strahlungsquellen des Systems als Infrarotlaser ausgebildet sind, also Strahlung in einem Spektralbereich zwischen 1 mm und 780 nm bzw. einem Frequenzbereich von 300 GHz bis 400 THz aussenden. Die Erfassungseinheiten sind dann entsprechend so ausgebildet, dass sie die vom Rad reflektierte Infrarotstrahlung erfassen können und in Bilddatensätze umwandeln können.

Bei der bevorzugten Ausgestaltung mit drei Messeinheiten sind folglich die erste Strahlungsquelle, die zweite Strahlungsquelle, die dritte Strahlungsquelle, die vierte Strahlungsquelle, die fünfte Strahlungsquelle und die sechse Strahlungsquelle als Infrarotlaser ausgebildet.

Um das Anwendungsspektrum des Systems zu erweitern, ist gemäß einer weiteren Ausgestaltung vorgesehen, dass der erste Systemteil mindestens eine Bremserfassungseinrichtung umfasst, und dass die Bremserfassungseinrichtung derart eingerichtet und ausgebildet ist, dass mindestens eine Bremsscheibe eines stehenden oder passierenden Schienenfahrzeuges erfassbar ist. Die Bremserfassungseinrichtung umfasst mindestens eine Messeinheit. Es ist vorgesehen, dass die Messeinheit der Bremserfassungseinrichtung so ausgebildet ist, wie die Messeinheiten für das Rad, mit dem Unterschied, dass eine Messeinheit auf einen Bereich an einer Bremsscheibe ausgerichtet ist.

Vorzugsweise umfasst eine Bremserfassungseinrichtung mindestens zwei, vorzugsweise drei, identische Messeinheiten. Insbesondere ist vorgesehen, dass das System zwei, vorzugsweise drei, Bremserfassungseinrichtung umfasst, mit denen alle zwei bzw. drei Bremsscheiben eines Radsatzes erfassbar und deren geometrische Eigenschaften ermittelbar sind. Insbesondere erfolgt die Auswertung mit der Auswerteeinheit des Systems. Die Bremserfassungseinrichtung bzw. die Bremserfassungseinrichtungen sind folglich so im System und an der Schiene angeordnet, dass sie zur Erfassung der Bremsscheiben eines passierenden Zuges ausgerichtet sind. Sämtliche Eigenschaften, die für die Messeinheiten oder Systemteile beschrieben worden sind, gelten auch für die Bremserfassungseinrichtung.

Um den Auslösezeitpunkt für alle Messeinheiten präzise festzulegen, ist gemäß einer weiteren Ausgestaltung vorgesehen, dass der erste Systemteil mindestens eine erste Auslöseeinrichtung und mindestens eine zweite Auslöseeinrichtung umfasst, dass die erste Auslöseeinrichtung und die zweite Auslöseeinrichtung auf das auf der Schiene stehende oder passierende Rad ausgerichtet sind, und dass mit der ersten Auslöseeinheit und mit der zweiten Auslöseeinheit eine Projektion und Erfassung mit der ersten Messeinheit und/oder der zweiten Messeinheit und/oder der dritten Messeinheit auslösbar ist. Vorzugsweise ist eine Projektion und Erfassung mit allen drei Messeinheiten mit den beiden Auslöseeinheiten gleichzeitig auslösbar bzw. wird gleichzeitig - zum Auslösezeitpunkt - ausgelöst.

Vorteilhaft ist vorgesehen, dass die erste Auslöseeinheit und die zweite Auslöseeinheit in Schienenlängsrichtung zueinander beabstandet sind. Vorzugsweise erfasst eine Auslöseeinheit einen bewegungsrichtungszugewandten Teil des Umfangs des Rades und die zweite Auslöseeinheit den bewegungsrichtungsabgewandten Teil des Umfangs des Rades. Der Zeitpunkt, zu dem von beiden Auslöseeinheiten ein Auslösesignal generiert wird, ist der Auslösezeitpunkt, der vorzugsweise für alle drei Messeinheiten, also für mindestens drei Strahlungsquellen und mindestens sechs Erfassungseinrichtungen, identisch ist.

Das System lässt sich gemäß einer letzten Ausgestaltung dadurch verbessern, dass ein zweiter Systemteil umfasst ist, dass der zweite Systemteil identisch zu dem ersten Systemteil ausgebildet ist und dass der zweite Systemteil an der zweiten Schiene des Gleises angeordnet ist. Der zweite Systemteil ist vorzugsweise derart ausgebildet und eingerichtet, dass ein zweites Rad eines Schienenfahrzeuges, vorzugsweise das dem Radsatz des ersten Rades zugeordnete zweite Rad, erfassbar ist.

Mit einem ersten Systemteil und einem zweiten Systemteil lassen sich folglich gleichzeitig das erste Rad und das zweite Rad eines Radsatzes erfassen und die Eigenschaften bestimmen. Vorzugweise werden gleichzeitig zum einem Auslösezeitpunkt mit dem ersten Systemteil und dem zweiten Systemteil Eigenschaften des ersten Rades und des zweiten Rades erfasst. Zudem können über die Software gesteuerte Auswertungen Aussagen in Bezug auf die Positionierung des ersten Rades und des zweiten Rades relativ zueinander getroffen werden, da die Montagepositionen und Ausrichtung der Messeinheiten des ersten Systemteils und des zweiten Systemteils, auch relativ zueinander, vollständig bekannt sind. Dazu ist vorgesehen, dass die Ausrichtung und Montagepositionen aller Messeinheiten und/oder Strahlungsquellen und/oder Erfassungseinheiten, insbesondere auch relativ zueinander, bei der Auswertung von der Auswerteeinheit berücksichtigt werden, um Eigenschaften des Radsatzes zu ermitteln.

Die erfindungsgemäße Aufgabe ist ferner gelöst durch ein Verfahren zur Ermittlung von Eigenschaften eines Rades eines Schienenfahrzeugs, wobei das Verfahren insbesondere mit einem voranstehend beschriebenen System durchgeführt wird. Das Verfahren ist gekennzeichnet durch die folgenden Verfahrensschritte:
- Projizieren mindestens eines ersten mindestens zweidimensionalen Musters in mindestens einen ersten Bereich auf ein auf einer Schiene angeordnetes, also passierendes oder stehendes, erstes Rad mit einer ersten elektromagnetischen Strahlungsquelle,
- Erfassen des ersten Musters in dem ersten Bereich mit mindestens einer ersten Erfassungseinrichtung und Erzeugen mindestens eines ersten Bilddatensatzes,
- Erfassen und Erzeugen eines zweiten Bilddatensatzes mit einer weiteren Erfassungseinrichtung für den ersten Bereich,
- Berechnen eines Modelldatensatzes unter Verwendung des ersten Bilddatensatzes und des zweiten Bilddatensatzes, wobei der Modelldatensatz als dreidimensionales, zumindest teilweises Modell des ersten Rades darstellbar ist.

Mit einer ersten elektromagnetischen Strahlungsquelle, die insbesondere als Laser, besonders bevorzugt als Infrarotlaser, ausgebildet ist, wird zunächst ein zweidimensionales, flächiges Muster in einen ersten Bereich auf ein stehendes oder passierendes erstes Rad eines Schienenfahrzeuges projiziert. Dieses Muster wird mit einer auf den ersten Bereich ausgerichteten ersten Erfassungseinrichtung erfasst und ein erster Bilddatensatz erzeugt. Anschließend wird aus diesem Bilddatensatz, insbesondere unter Verwendung einer als Computer ausgebildeten Auswerteeinheit, ein Modelldatensatz berechnet. Der Modelldatensatz wird derart mindestens aus dem ersten Bilddatensatz berechnet, dass der Modelldatensatz als zumindest teilweises dreidimensionales Modell des ersten Rades darstellbar ist. Insbesondere wird auf Basis des Bilddatensatzes mittels Triangulation die Lage der erfassten Datenpunkte des zweidimensionalen Musters im Raum berechnet, so dass jeder Datenpunkt, insbesondere über Polarkoordinaten, einer bestimmten Lage im Raum, insbesondere einer Position am Rad, zugeordnet wird. Durch diese Zuordnung, insbesondere über Polarkoordinaten, bildet der Modelldatensatz ein zumindest teilweises dreidimensionales Modell des ersten Rades ab und ist als solches darstellbar. Auf Basis des Modelldatensatzes werden beliebige geometrische Eigenschaften des Rades des Schienenfahrzeuges berechnet, beispielsweise die Höhe und Breite des Radkranzes, das Profil der Lauffläche usw.

Gemäß einer ersten Ausgestaltung des Verfahrens ist vorgesehen, dass zusätzlich folgender Verfahrensschritt ausgeführt wird:
- Berechnen eines Profildatensatzes unter Verwendung des Modelldatensatzes, wobei der Profildatensatz durch Transformation des Modelldatensatzes in eine Ebene berechnet wird, und wobei der Profildatensatz als zweidimensionales Profil des ersten Rades darstellbar ist.

Der Profildatensatz wird folglich aus sämtlichen Daten des Modelldatensatzes berechnet. Vorzugsweise werden die Messdatenpunkte des Modelldatensatzes in eine zweidimensionale Ebene transformiert, also umgerechnet, und so ein gemitteltes - mit allen vorhandenen Messdatenpunkten auf dem Radumfang - zweidimensionales Profil des ersten Rades, insbesondere beinhaltend die Lauffläche und den Radkranz, berechnet. Der Profildatensatz beinhaltet folglich die dreidimensionalen Daten des Modelldatensatzes, die auf ein gemeinsames, gemitteltes Profil - in zwei Dimensionen - umgerechnet bzw. transformiert worden sind.

Die Eigenschaften des Rades, beispielsweise die Höhe und Breite des Radkranzes, die Radbreite im Profilbereich sowie der Rad-Laufkreisdurchmesser oder der Rad-Rückenabstand lassen sich vorteilhaft auf Basis des Profildatensatzes bestimmen.

Vorteilhaft ist ferner vorgesehen, dass der Profildatensatz, insbesondere mit der Auswerteeinheit, mit mindestens einem in einer Datenbank gespeicherten weiteren Profildatensatz verglichen wird, und dass durch diesen Vergleich Veränderungen in den geometrischen Eigenschaften des Rades ermittelt werden. Der weitere Profildatensatz ist beispielsweise ein von diesem Rad zu einem anderen, beispielsweise früheren; Zeitpunkt erfasster und abgespeicherter Profildatensatz.

Die Genauigkeit des Verfahrens lässt sich gemäß einer weiteren Ausgestaltung dadurch weiter steigern, dass vorgesehen ist, dass mindestens folgende weitere Verfahrensschritte umfasst sind.
- Projizieren mindestens eines zweiten mindestens zweidimensionalen Musters in mindestens einem zweiten Bereich auf das auf der Schiene angeordnete, also stehende oder passierende, erstes Rad mit einer zweiten elektromagnetischen Strahlungsquelle,
- Erfassen des zweiten Musters in dem zweiten Bereich mit mindestens einer zweiten Erfassungseinrichtung und Erzeugen mindestens eines ersten Bilddatensatzes des zweiten Bereichs,
- Berechnen des ersten Modellsatzes unter zusätzlicher Verwendung des ersten Bilddatensatzes des zweiten Bereichs.

Der Modelldatensatz wird folglich unter Verwendung des ersten Bilddatensatzes des ersten Bereichs und des ersten Bilddatensatzes des zweiten Bereichs berechnet. Konkret bedeutet das, dass mittels Triangulation den Bilddatensätzen des ersten Bereichs und des zweiten Bereichs, nämlich den Messpunkten, eine Lage im Raum zugeordnet wird. Insbesondere wird diese Lage im Raum über Polarkoordinaten beschrieben. Der erste Bereich und der zweite Bereich sind überschneidungsfrei, so dass aus dem ersten Bilddatensatz des ersten Bereichs und dem ersten Bilddatensatz des zweiten Bereichs unterschiedliche Bereiche des Modelldatensatzes, also des dreidimensionalen Modell des Rades, berechnet werden.

Besonders bevorzugt ist gemäß einer weiteren Ausgestaltung vorgesehen, dass folgende Verfahrensschritte umfasst sind:
- Projizieren mindestens eines dritten mindestens zweidimensionalen Musters in mindestens einen dritten Bereich auf das auf der Schiene angeordnete, also stehende oder passierende, erste Rad mit einer dritten elektromagnetischen Strahlungsquelle,
- Erfassen des dritten Musters in dem dritten Bereich mit mindestens einer dritten Erfassungseinrichtung und Erzeugen mindestens eines ersten Bilddatensatzes des dritten Bereichs,
- Berechnen des ersten Modelldatensatzes unter Verwendung des ersten Bilddatensatzes des dritten Bereichs, wobei der Modelldatensatz als dreidimensionales, zumindest teilweises Modell des Rades darstellbar ist.

Besonders bevorzugt wird folglich der Modelldatensatz unter Verwendung des ersten Bilddatensatzes des ersten Bereichs, des ersten Bilddatensatzes des zweiten Bereichs und des ersten Bilddatensatzes des dritten Bereichs berechnet. Der erste Bereich, der zweite Bereich und der dritte Bereich sind vorzugsweise überschneidungsfrei, so dass mit den drei Bilddatensätzen unterschiedliche Bereiche des Modelldatensatzes, also des dreidimensionales Modells des Rades, berechnet werden.

Vorzugsweise ist vorgesehen, dass das Erfassen des ersten Musters, das Erfassen des zweiten Musters und das Erfassen des dritten Musters gleichzeitig erfolgt. Das Erfassen erfolgt somit zu einem gemeinsamen Auslösezeitpunkt, so dass die dem Modelldatensatz zugrunde liegenden Daten zum identischen Zeitpunkt erfasst worden sind.

Die Genauigkeit des Verfahrens wird weiter gesteigert, indem gemäß einer weiteren Ausgestaltung vorgesehen ist, dass für den ersten Bereich und/oder für den zweiten Bereich und/oder für den dritten Bereich mit jeweils einer weiteren Erfassungseinheit jeweils ein zweiter Bilddatensatz erfasst wird, und dass jeder zweite Bilddatensatz zur Berechnung des ersten Modelldatensatzes herangezogen wird.

Vorzugsweise wird dieser jeweilige zweite Bilddatensatz gleichzeitig, also zum Auslösezeitpunkt, mit dem ersten Bilddatensatz erfasst. Für jeden Bereich liegen somit zum Auslösezeitpunkt ein erster Bilddatensatz und ein zweiter Bilddatensatz vor, auf dessen Basis eine Berechnung des ersten Modelldatensatzes erfolgt. Durch die redundante Erfassung jeden Bereichs wird die Genauigkeit des Verfahrens gesteigert.

Ferner ist gemäß einer Ausgestaltung des Verfahrens vorgesehen, dass der Modelldatensatz des ersten Rades und der Modelldatensatz eines zweiten Rades eines Radsatzes sowie die geometrische Anordnung und Ausrichtung der Strahlungsquellen und/oder Erfassungseinheiten miteinander korreliert werden, um die Lage des ersten Rades eines Radsatzes relativ zum zweiten Rad zu bestimmen. Ferner ist vorgesehen, dass auch der Profildatensatz eines ersten Rades mit dem Profildatensatz eines zweiten Rades eines Radsatzes sowie die geometrische Anordnung und Ausrichtung der Strahlungsquellen und/oder Erfassungseinheiten miteinander korreliert werden, um die Lage, beispielsweise verschiedene Messabstände, des ersten Rades relativ zu zweiten Rad zu ermitteln.

Im Einzelnen gibt es nun eine Vielzahl von Möglichkeiten, das System und das Verfahren auszugestalten und weiterzubilden. Dazu wird verwiesen sowohl auf die den Patentansprüchen 1 und 10 nachgeordneten Patentansprüche sowie auf die nachfolgende Beschreibung von bevorzugten Ausführungsbeispielen in Verbindung mit der Zeichnung. In der Zeichnung zeigen:
- Fig. 1: ein Ausführungsbeispiel eines Systems in perspektivischer Ansicht,
- Fig. 2: ein Ausführungsbeispiel eines ersten Systemteils in Seitenansicht,
- Fig. 3: ein Ausführungsbeispiel eines Systems in Draufsicht,
- Fig. 4: ein Ausführungsbeispiel eines Systems in Seitenansicht,
- Fig. 5: ein Ausführungsbeispiel eines Systems in Seitenansicht,
- Fig. 6: ein Ausführungsbeispiel eines Systems in Frontansicht,
- Fig. 7: ein Ausführungsbeispiel eines Systems mit Projektion in Draufsicht,
- Fig. 8: eine Detailansicht eines Rades während der Projektion,
- Fig. 9a: ein schematisches Ablaufdiagramm eines Verfahrens,
- Fig. 9b: ein schematisches Ablaufdiagramm eines Verfahrens,
- Fig. 9c: ein schematisches Ablaufdiagramm eines Verfahrens,
- Fig. 10: eine Übersicht der geometrischen Eigenschaften des Rades,
- Fig. 11: eine beispielhafte dreidimensionale Darstellung eines Modelldatensatzes, und
- Fig. 12: eine beispielhafte zweidimensionale Darstellung eines Profildatensatzes.

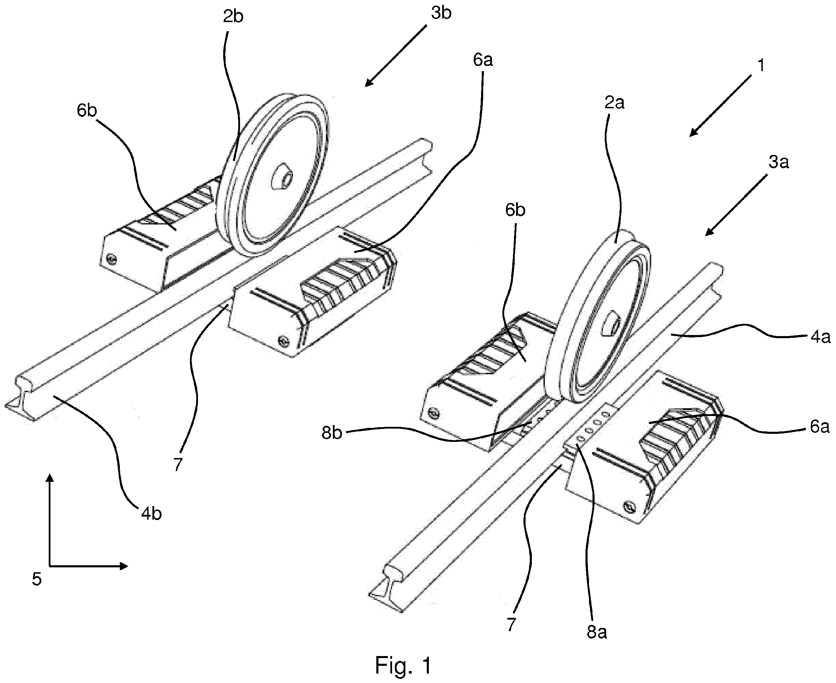

Fig. 1 zeigt ein Ausführungsbeispiel eines Systems 1 zur Ermittlung von Eigenschaften, insbesondere geometrischen Eigenschaften, eines Rades 2 - erstes Rad 2a, zweites Rad 2b - eines Schienenfahrzeugs - nicht dargestellt. Das System 1 umfasst einen ersten Systemteil 3a, der an einer Schiene 4 - erste Schiene 4a, zweite Schiene 4b - eines Gleises 5 angeordnet ist. Fig. 1 zeigt, dass der erste Systemteil 3a ein erstes Außengehäuse 6a und ein zweites Außengehäuse 6b umfasst. Das erste Außengehäuse 6a und das zweite Außengehäuse 6b sind auf einer Montageplatte 7 angeordnet, die die Schiene 4a unterläuft und mittels Spannplatten 8a, 8b am Schienenfuß der Schiene 4a befestigt ist. Das erste Außengehäuse 6a und das zweite Außengehäuse 6b sind so gestaltet, dass die Oberkante auf einer Höhe mit der Schienenoberkante oder niedriger liegt.

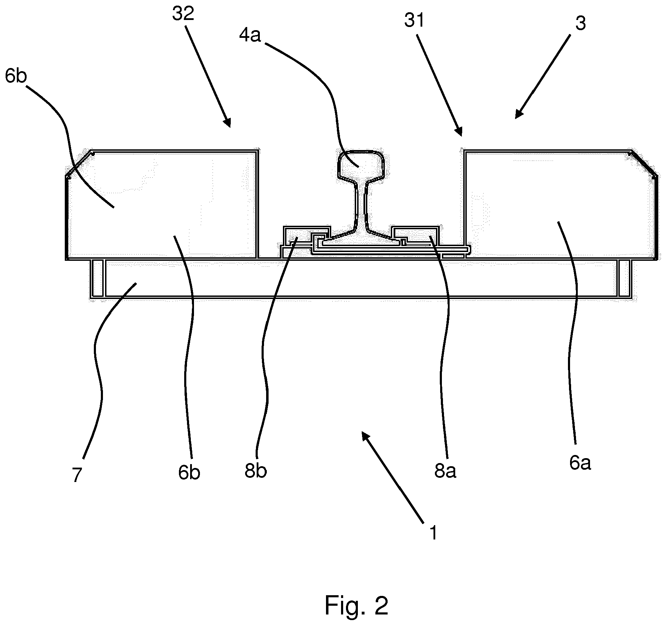

Fig. 2 zeigt den ersten Systemteil 3a in einer Seitenansicht mit geschnittener erster Schiene 4a. Die Montageplatte 7 unterläuft die Schiene 4a und ist mit Spannplatten 8a, 8b am Schienenfuß der Schiene 4a befestigt. Die Außengehäuse 6a und 6b des Systems 1 sind an der Montageplatte 7 befestigt und befinden sich mit ihrer Oberkante auf einer Höhe mit der Oberkante der Schiene 4a.

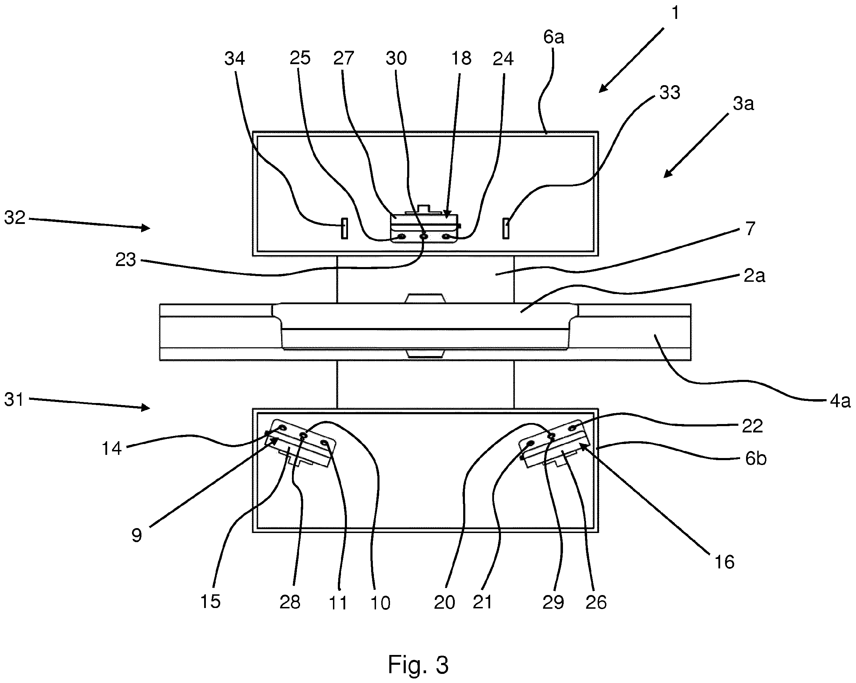

Fig. 3 zeigt ein Ausführungsbeispiel eines Systems 1, insbesondere eines ersten Systemteils 3a, in Draufsicht. Der erste Systemteil 3 umfasst mindestens eine erste Messeinheit 9, die eine erste elektromagnetische Strahlungsquelle 10 und eine erste Erfassungseinheit 11 aufweist. Die erste elektromagnetische Strahlungsquelle 10 ist bei diesem Ausführungsbeispiel als Infrarotlaser ausgebildet, wobei die erste Erfassungseinrichtung 11 als Kamera ausgebildet ist, die die von dem auf der Schiene angeordneten Rad 2 reflektierten Infrarotstrahlen erfassen kann.

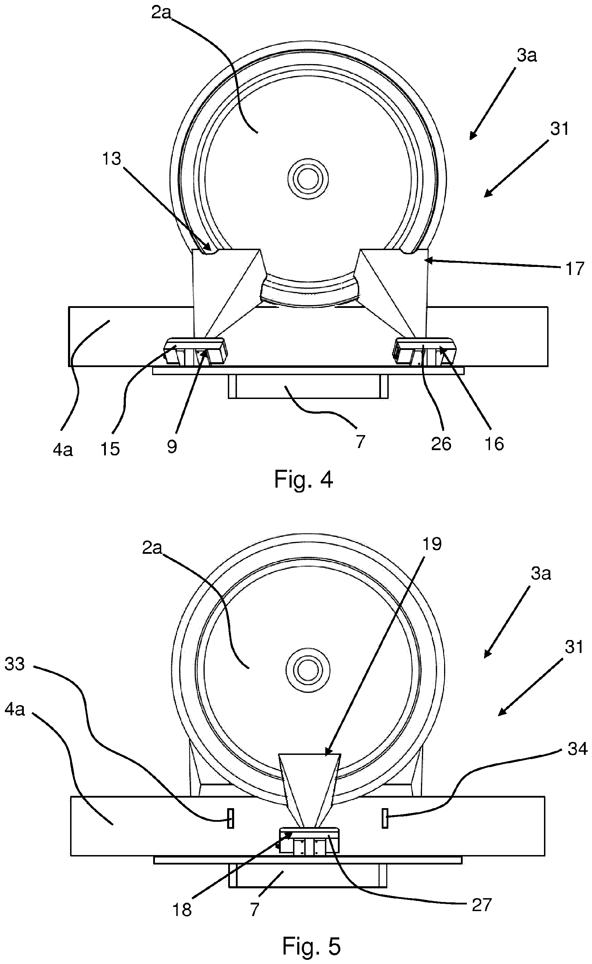

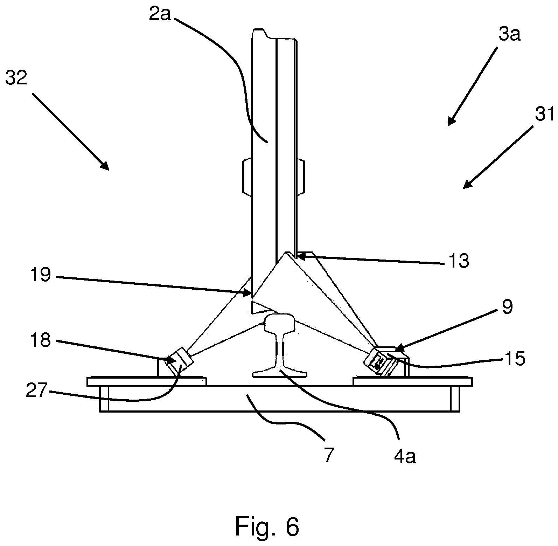

Fig. 4 bis 7 ist das Ausführungsbeispiel gemäß Fig. 3 zu entnehmen, wobei die projizierte elektromagnetische Strahlung, bei diesem Ausführungsbeispiel aufgeweitete Laserstrahlen, die ein Muster abbilden, beispielhaft dargestellt sind.

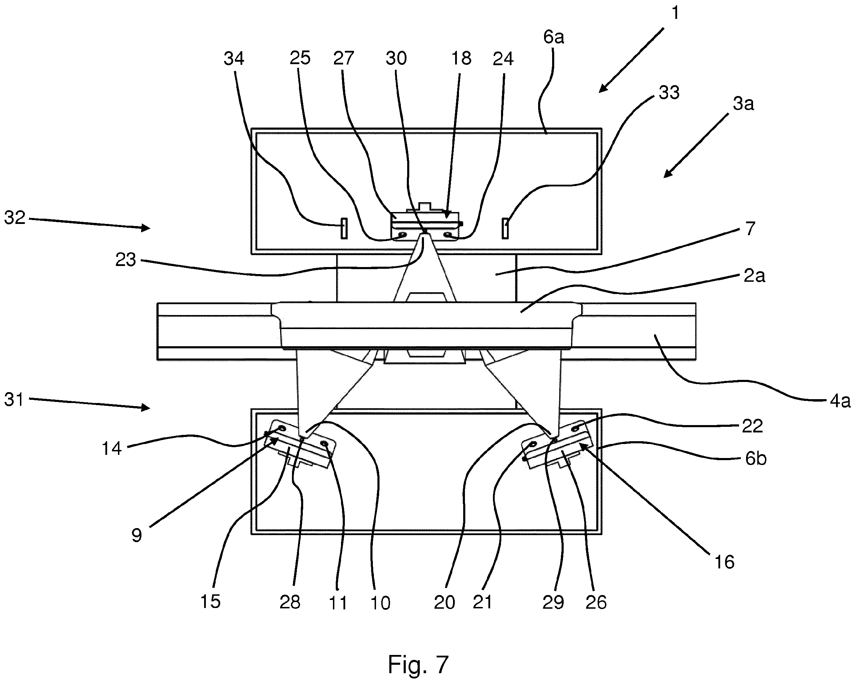

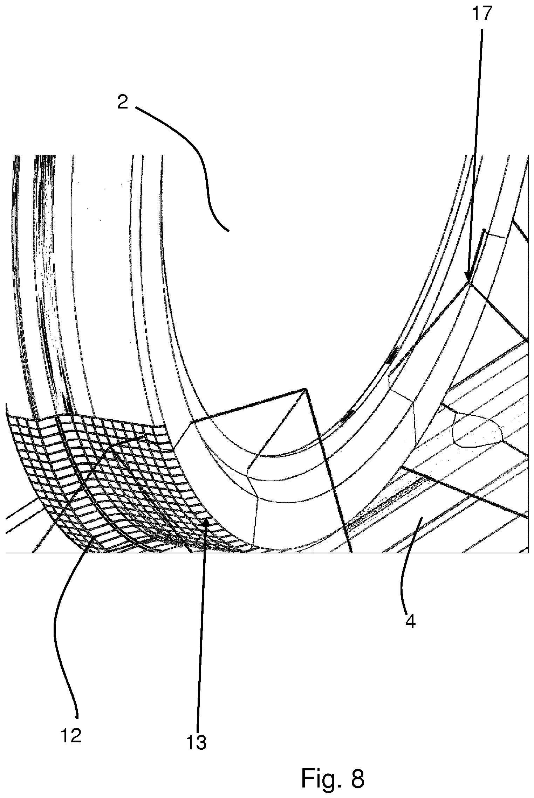

Fig. 8 ist eine Detailaufnahme der Projektion im ersten Bereich 13 zu entnehmen, bei der ein erstes Muster 12 in dem ersten Bereich 13 auf das Rad 2 projiziert wird. Die in den Fig. 3 und 7 gezeigte erste Erfassungseinrichtung 11 erfasst das erste Muster 12 in dem ersten Bereich 13 und erzeugt daraus einen ersten Bilddatensatz. Gemäß Fig. 8 ist das erste Muster 12 ein zweidimensionales flächiges Muster 12, hier in Form eines regelmäßigen Gitters, das auf die dreidimensionale Oberfläche des Rades 2 projiziert und verzerrt wird.

Gemäß Fig. 3 umfasst die erste Messeinheit 9 ferner eine zweite Erfassungseinrichtung 14, wobei die zweite Erfassungseinrichtung 14 derart ausgebildet und eingerichtet ist, dass das erste Muster 12 in dem ersten Bereich 13 auf dem Rad 2 erfassbar ist (siehe auch Fig. 4 und Fig. 7). Die erste elektromagnetische Strahlungsquelle 10, die erste Erfassungseinrichtung 11 sowie die zweite Erfassungseinrichtung 14 der ersten Messeinheit 9 sind in einem gemeinsamen Gehäuse 15 untergebracht.

Der erste Systemteil 3 des Systems 1 umfasst ferner eine zweite Messeinheit 16 für einen zweiten Bereich 17 auf dem Rad 2 (siehe Fig. 3 und Fig. 4) sowie eine dritte Messeinheit 18 für einen dritten Bereich 19 auf dem Rad 2 (siehe Fig. 5 und Fig. 7). Die zweite Messeinheit 16 umfasst eine zweite elektromagnetische Strahlungsquelle 20 sowie eine dritte Erfassungseinrichtung 21 und eine vierte Erfassungseinrichtung 22. Die dritte Messeinheit 18 umfasst eine dritte elektromagnetische Strahlungsquelle 23, eine fünfte Erfassungseinrichtung 24 sowie eine sechste Erfassungseinrichtung 25 (siehe Fig. 3).

Mit der dritten Erfassungseinrichtung 21 und mit der vierten Erfassungseinrichtung 22 erfolgt eine Erfassung des von der zweiten elektromagnetischen Strahlungsquelle 20 projizierten zweiten Musters 12a im zweiten Bereich 17 auf dem Rad 2. Die fünfte Erfassungseinheit 24 sowie die sechste Erfassungseinheit 25 dienen der Erfassung des dritten Musters 12b, das von der dritten elektromagnetischen Strahlungsquelle 23 in den dritten Bereich 19 auf dem Rad 2 projiziert wird.

Die zweite Messeinheit 16 ist in einem zweiten Gehäuse 26 und die dritte Messeinheit 18 ist in einem dritten Gehäuse 27 angeordnet. Das erste Gehäuse 15, das zweite Gehäuse 26 sowie das dritte Gehäuse 27 sind im Montagezustand innerhalb der jeweiligen Außengehäuse 6a, 6b untergebracht (siehe Fig. 1). Die Außengehäuse 6a, 6b weisen in den in Richtung der Schiene 4a orientierten Seitenbereichen jeweils eine Öffnung für die Projektion und Erfassung auf.

Gemäß Fig. 3 weist die erste Messeinheit 9 zudem eine vierte Strahlungsquelle 28, die zweite Messeinheit eine fünfte Strahlungsquelle 29 sowie die dritte Messeinheit 18 eine sechste Strahlungsquelle 30 auf, so dass jede Messeinheit 9, 16, 18 eine weitere Strahlungsquelle 28, 29, 30 aufweist. Die weiteren Strahlungsquellen 28, 29, 30 dienen der Beleuchtung des jeweiligen Bereichs 13, 17, 19 und sind als Infrarotlaser ausgebildet.

Fig. 3, Fig. 6 und Fig. 7 ist zu entnehmen, dass die erste Messeinheit 9 und die zweite Messeinheit 16 auf einer ersten Seite 31 der Schiene 2 angeordnet sind, während die dritte Messeinheit 18 auf einer zweiten Seite 32 der Schiene angeordnet ist. Auf der zweiten Seite 32 der Schiene 4 ist eine erste Auslöseeinheit 33 und eine zweite Auslöseeinheit 34 angeordnet, die nach festgelegten Kriterien den Auslösezeitpunkt für die Strahlungsquellen 10, 20, 23, 28, 29, 30 und die Erfassungseinrichtungen 11, 14, 21, 22, 24, 25 festlegen, so dass eine Projektion und Erfassung in allen drei Bereichen 12, 17, 19 gleichzeitig erfolgt.

Fig. 1 ist ferner zu entnehmen, dass das System 1 einen zweiten Systemteil 3b umfasst, der identisch wie der erste Systemteil 3a ausgebildet ist und die Eigenschaften des zweiten Rades 2b erfasst.

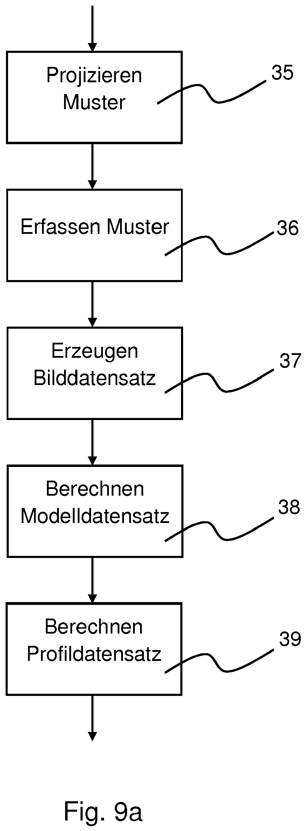

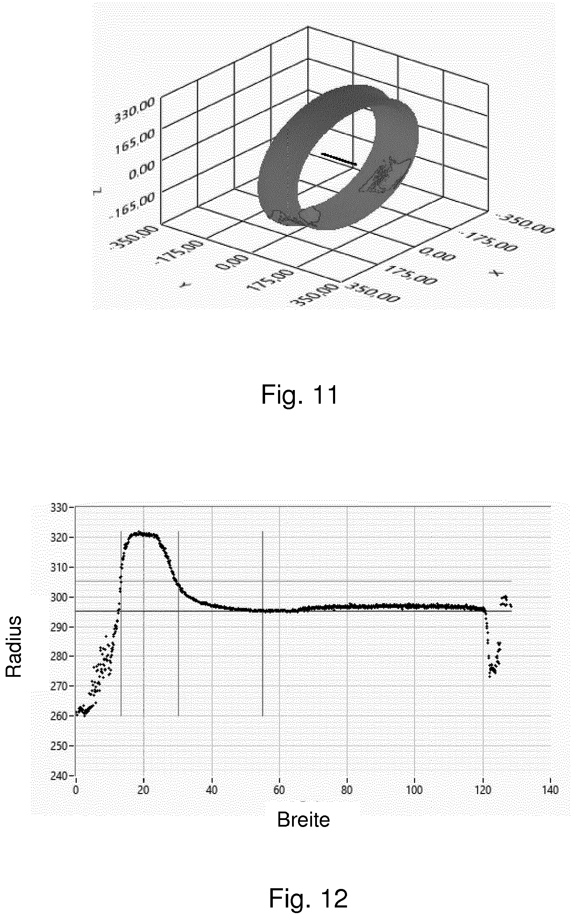

Fig. 9a zeigt einen schematischen Ablauf eines Ausführungsbeispiels eines Verfahrens zur Ermittlung von Eigenschaften eines Rades 2 eines Schienenfahrzeuges. Zunächst erfolgt ein Projizieren 35 mindestens eines ersten zweidimensionalen Musters 12 in mindestens einem ersten Bereich 13 auf ein auf der Schiene 4 stehendes oder passierendes erstes Rad 2 mit einer ersten elektromagnetischen Strahlungsquelle 11. Ferner erfolgt ein Erfassen 36 des ersten Musters 12 in dem ersten Bereich 13 mit mindestens einer ersten Erfassungseinrichtung 11 sowie das Erzeugen 37 mindestens eines ersten Bilddatensatzes. Aus dem Bilddatensatz wird ein Modelldatensatz 38 berechnet. Sowie anschließend aus dem Modelldatensatz ein Profildatensatz 39 berechnet. Der Profildatensatz dient als Basis für die Bestimmung der geometrischen Eigenschaften des Rades 2, beispielsweise die Höhe und Breite des Radkranzes, das Profil der Lauffläche usw. Eine beispielhafte dreidimensionale Darstellung des Rades 2, nämlich eines Modelldatensatzes ist der Fig. 11 zu entnehmen, eine beispielhafte zweidimensionale Darstellung des Profils des Rades 2 im Bereich der Lauffläche und des Radkranzes, nämlich des Profildatensatzes ist der Fig. 12 zu entnehmen.

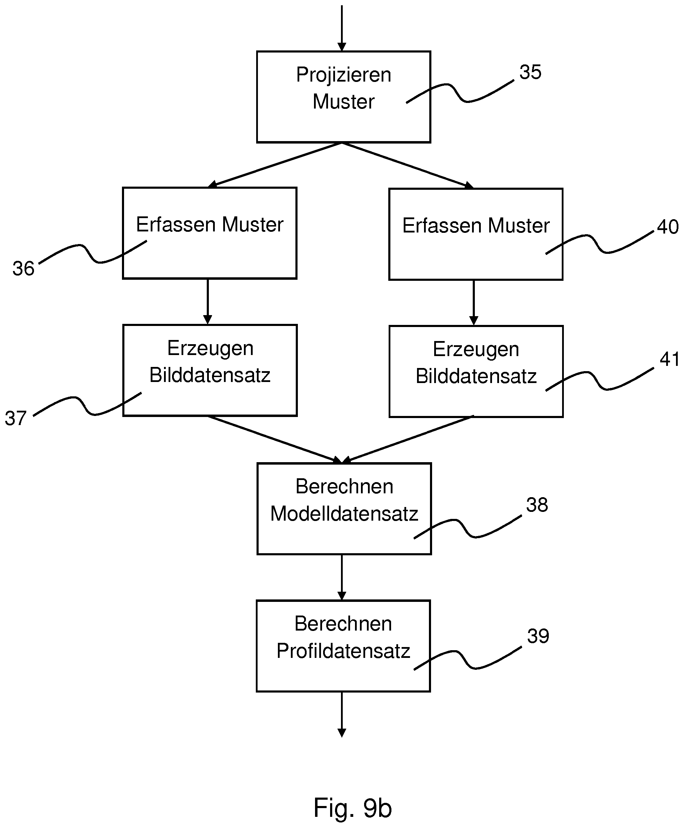

Fig. 9b zeigt einen schematischen Ablauf ein Ausführungsbeispiels eines Verfahrens, bei dem das Projizieren 35 eines ersten mindestens zweidimensionalen Musters 12 auf mindestens einen ersten Bereich 13 eines auf einer Schiene 4 passierenden oder stehenden ersten Rades 2 mit einer elektromagnetischen Strahlungsquelle 10 erfolgt. Neben dem Erfassen 36 des ersten Musters in dem ersten Bereich 13 mit mindestens einer ersten Erfassungseinrichtung 11 erfolgt ein Erfassen 40 des ersten Musters 12 in dem ersten Bereich 13 mit mindestens einer zweiten Erfassungseinrichtung 14 sowie ein Erzeugen 41 mindestens eines zweiten Bilddatensatzes des ersten Bereichs 13. Das Erfassen 36 und das Erfassen 40 mit der ersten Erfassungseinrichtung 11 und der zweiten Erfassungseinrichtung 14 erfolgt gleichzeitig. Nach dem Erzeugen 37 des ersten Bilddatensatzes des ersten Bereichs 13 und dem Erzeugen 41 des zweiten Bilddatensatzes des ersten Bereichs 13 erfolgt ein Berechnen 38 des Modelldatensatzes sowie ein anschließendes Berechnen 39 des Profildatensatzes.

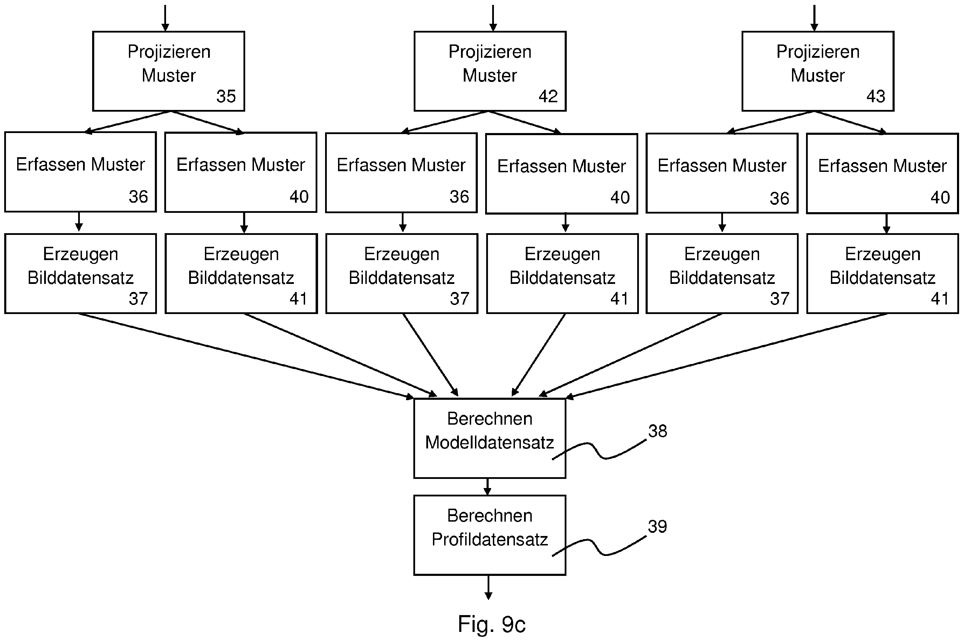

Fig. 9c zeigt einen schematischen Ablauf eines Ausführungsbeispiels eines Verfahrens zur Bestimmung von Eigenschaften eines Rades 2, bei dem zunächst ein Projizieren 35 mindestens eines ersten Musters 12 in mindestens einem ersten Bereich 13 sowie ein Projizieren 42 eines zweiten Musters 12a in einem zweiten Bereich 17 sowie ein Projizieren 43 eines dritten Musters 12c in einem dritten Bereich 19 erfolgt. Ferner erfolgt in jedem der Bereiche 13, 17, 19 ein Erfassen 36 des Musters mit einer ersten Erfassungseinrichtung 10, 21, 24 sowie ein Erfassen 40 mit einer zweiten Erfassungseinrichtung 14, 21, 25 und ein Erzeugen 37, 41 eines ersten Bilddatensatzes und eines zweiten Bilddatensatzes für jeden Bereich 13, 17, 19. Abschließend erfolgt ein Berechnen 38 des Modelldatensatzes auf Basis aller erzeugten ersten und zweiten Bilddatensätze sowie ein Berechnen 39 eines Profildatensatzes aus dem Modelldatensatz.

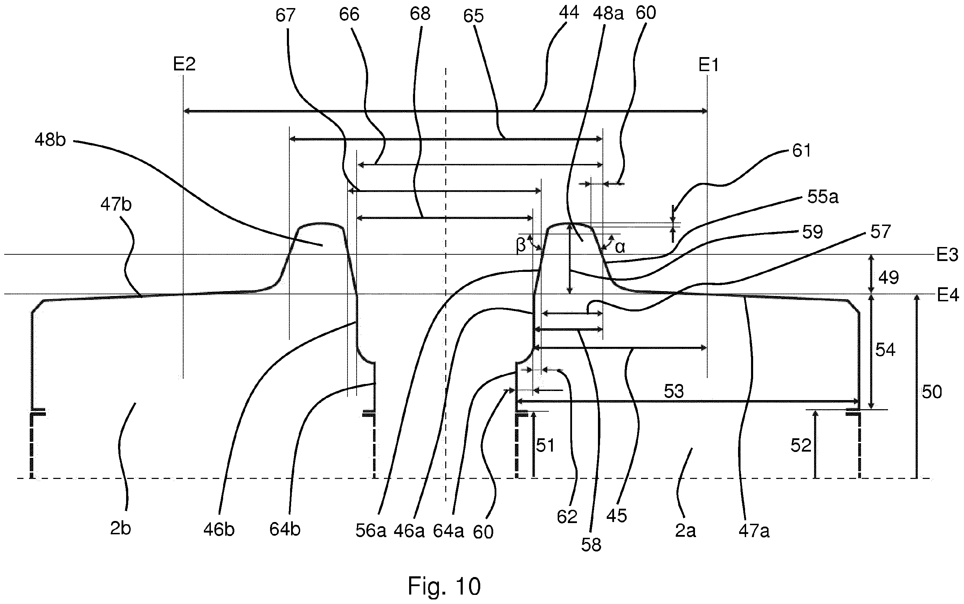

Fig. 10 zeigt eine Übersicht der ermittelbaren geometrischen Eigenschaften des erstes Rades 2a und des zweiten Rades 2b sowie der Eigenschaften des ersten Rades 2a relativ zum zweiten Rad 2b, also des Radsatzes. Das System, insbesondere die Auswerteeinheit, und/oder das Verfahren sind insbesondere so ausgebildet und eingerichtet, dass alle in Fig. 10 dargestellten Maße einzeln oder in Kombination ermittelbar sind und/oder ermittelt werden. Das System und/oder das Verfahren ist folglich zum Ermitteln aller in Fig. 10 dargestellten Maße einzeln oder in Kombination eingerichtet. Insbesondere werden die in Fig. 10 dargestellten Maße aus dem Profildatensatz und/oder der Korrelation des Profildatensatzes des ersten Rades 2a mit dem Profildatensatz des zweiten Rades 2b sowie der Anordnung der Messeinheiten 9, 16, 18 und deren Komponenten ermittelt.

Der Messkreisebenenabstand 44 gibt den Abstand der Messkreisebene E1 des ersten Rades 2a zur Messkreisebene E2 des zweiten Rades 2b an. Die Messkreisebene E1 und die Messkreisebene E2 sind derart angeordnet, dass die Rotationsachse des ersten Rades 2a und die Rotationsachse des zweiten Rades 2b die Messkreisebene E1 und die Messkreisebene E2 im Wesentlichen orthogonal durchtreten. Die Messkreisebene E1 und die Messkreisebene E2 sind ferner derart angeordnet, dass sie mit dem Messkreisebenenabstandx 45 zwischen etwa 60 mm und 65 mm von der Innenflanke 46a des ersten Rades 2a bzw. der Innenflanke 46b des zweiten Rades 2b beanstandet ist. Der Schnittkreis der Messkreisebene E1, E2 mit der Lauffläche 47a, 47b definiert den Aufstandsring bzw. Aufstandspunkt des Rades 2a, 2b auf einer Schiene 4a, 4b.

Die Maße am Radkranz 48a, 48b bestimmen sich in einer Schnittebene E3, die orthogonal zur Messkreisebene E1, E2 angeordnet ist, und die im dargestellten Querschnitt mit einem Messkreisebenenabstand-y 49 von etwa 10 mm von dem Schnittpunkt der Messkreisebene E1, E2 mit der Lauffläche 47a, 47b beanstandet ist.

Der Durchmesser 50 des Rades 2a wird ebenfalls in der Messkreisebene E1 bestimmt. Weitere wichtige Maße des Rades sind der Radkörperinnendurchmesser 51 sowie der Radkörperaußendurchmesser 52 und die Radreifenbreite 53.Die Höhe 54 des Radreifens wird in der Messkreisebene E1 zwischen der Unterkante des Radreifens und dem Schnittpunkt mit der Lauffläche 47a bestimmt.

Die Schnittebene E3 bildet die Grundlage für die Bemaßung des Rades 2a im Bereich des Radkranzes 48a. Die Schnittpunkte - im Querschnitt - der Schnittebene E3 mit der Innenflanke 55a des Radkranzes 48b und der Außenflanke 56a des Radkranzes 48a bilden den Ausgangspunkt für folgende Bemaßungen. Eine erste Radkranzbreite 57 wird als Abstand der Schnittpunkte des Radkranzes 48a in der Schnittebene E3 bestimmt. Eine zweite Radkranzbreite 58 wird zwischen dem innenliegenden Schnittpunkt des Radkranzes 48a mit der Schnittebene E3 und der Innenflanke 46a bestimmt. Eine Radkranzhöhe 59 wird ausgehend von einer Ebene E4, in der der Schnittpunkt der Messkreisebene E1 mit der Lauffläche 47a liegt, bis zur Oberkante des Spurkranzes bestimmt. Die Neigung der Innenflanke 55a und der Außenflanke 56a werden durch die Winkel α und β beschrieben. Alternativ kann die Neigung der Innenflanke 55a durch den Abstand 60 angegeben werden, der sich durch den innenliegenden Schnittpunkt der Schnittebene E3 mit dem Radkranz 48a an seiner Innenflanke 55a und dem Schnittpunkt der Innenflanke 55a in einem Abstand 61 zwischen 0,9 mm und 2 mm von der Oberkante des Randkranzes 48a. Das Flankenmaß 62 gibt den Abstand zwischen dem außenliegenden Schnittpunkt der Schnittebene E3 mit der Außenflanke 56a des Radkranzes 48a und der Innenflanke 46a an. Das Flankenmaß 63 den Abstand zwischen der Führungsflanke 64a und der Innenflanke 46a.

Das System und/oder das Verfahren sind insbesondere so ausgebildet und eingerichtet, das auch die in Fig. 10 dargestellten Maße als geometrische Eigenschaften des ersten Rades 2a relativ zum zweiten Rad 2 ermittelbar sind und/oder ermittelt werden, insbesondere durch Korrelation des ersten Profildatensatzes, des zweiten Profildatensatzes sowie der geometrischen Anordnung der Messeinheiten 9, 16, 18. Folglich sind das System und/oder das Verfahren zum Ermitteln der in Fig. 10 dargestellten Maße einzeln oder in Kombination als geometrische Eigenschaften des ersten Rades 2a relativ zum zweiten Rad 2, insbesondere durch Korrelation des ersten Profildatensatzes, des zweiten Profildatensatzes sowie der geometrischen Anordnung der Messeinheiten 9, 16, 18, eingerichtet. Dadurch, dass in einem System die Anordnung der Messeinheiten 9, 16, 18 des ersten Systemteils 3a und des zweiten Systemteils 3b zueinander bekannt sind, sind diese Informationen zur entsprechenden Auswertung durch die Auswerteeinheit verwertbar und werden zur Berechnung herangezogen.

Der Messkreisebenenabstand 44 gibt - wie bereits ausgeführt - den Abstand der Messkreisebene E1 des ersten Rades 2a zur Messkreisebene E2 des zweiten Rades 2b an. Das Spurmaß 65 gibt den Abstand der Schnittpunkte der Innenflanken 55a, 55b mit der Schnittebene E3 an. Das Leitmaß 66 kann beidseitig bestimmt werden und definiert den Abstand des Schnittpunkts der Schnittebene E3 mit der Innenflanke 55a des ersten Rades 2a und der Innenflanke 46b des zweites Rades 2b. Der Leitkreisabstand 67 definiert des Abstand der Schnittpunkte der Schnittebene E3 mit den Außenflanken 56a und 56b. Der Achsrückenabstand 68 definiert den Abstand der Innenflanken 46a und 46b des ersten Rades 2a und des zweiten Rades 2b.

Fig. 11 zeigt beispielhaft die dargestellten Daten des Modelldatensatzes, nämlich ein zumindest teilweises Modell des Rades 2. Die umrandet dargestellten Bereiche sind tatsächlich mit Daten hinterlegt, als aus den Bilddatensätzen berechnete Daten. Die anderen Bereiche sind extrapoliert worden. Die Maße auf den Achse x, y, z sind in Millimeter angegeben. Der Messdatensatz umfasst eine Vielzahl von Messdatenpunkten in einem dreidimensionalen Koordinatensystem, vorzugsweise als Polarkoordinaten. Die Messdatenpunkte bilden sie Oberfläche des Rades 2a in dem erfassten Bereich 13, 17, 19 ab.

Fig. 12 zeigt beispielhaft die dargestellten Daten eines Profildatensatzes, nämlich ein zweidimensionales Profil des Rades 2 im Bereich der Lauffläche 47 (siehe Fig. 10) und des Radkranzes 48. Auf der x-Achse ist die Radbreite und auf der y-Achse der Radius des Rades 2a in Millimeter dargestellt. In Fig. 12 sind alle Messdatenpunkte des Modelldatensatzes aus Fig. 11 in ein zweidimensionales kartesisches Koordinatensystem transformiert worden, so dass sich ein gemitteltes Profil des Rades 2 gemäß Fig. 12 im Bereich der Lauffläche 47, des Radkranzes 48 sowie der Innenflanke 46 ergibt. Ferner beinhalten die Daten den Durchmesser 50 des Rades 2a.

## Patentansprüche

1. System (1) zur Ermittlung von Eigenschaften mindestens eines Rades (2a) eines Schienenfahrzeugs, mit mindestens einem ersten Systemteil (3a), wobei der erste Systemteil (3a) an mindestens einer Schiene (4a) eines Gleises (5) anordenbar ist, wobei der erste Systemteil (3a) mindestens eine erste Messeinheit (9) umfasst, wobei die erste Messeinheit (9) mindestens eine erste elektromagnetische Strahlungsquelle (10) und mindestens eine erste Erfassungseinrichtung (11) aufweist, wobei die erste Strahlungsquelle (10) derart ausgebildet und eingerichtet ist, dass mit der ersten Strahlungsquelle (10) ein erstes Muster (12) in mindestens einem ersten Bereich (13) auf das auf der Schiene (4a) angeordnete Rad (2a) eines Schienenfahrzeuges projizierbar ist, wobei die erste Erfassungseinrichtung (11) derart ausgebildet und eingerichtet ist, dass mit der ersten Erfassungseinrichtung (11) das das erste Muster (12) in dem ersten Bereich (13) auf dem Rad (2) erfassbar ist, und wobei das erste Muster (12) ein mindestens zweidimensionales Muster ist,
**dadurch gekennzeichnet,**
**dass** die erste Messeinheit (9) eine zweite Erfassungseinrichtung (14) umfasst, und dass die zweite Erfassungseinrichtung (14) derart ausgebildet und eingerichtet ist, das mit der zweiten Erfassungseinrichtung (14) das erste Muster (12) in dem ersten Bereich (13) auf dem Rad (2) erfassbar ist.

2. System (1) nach Anspruch 1, **dadurch gekennzeichnet,**
**dass** der erste Systemteil (3a) eine zweite Messeinheit (16) für einen zweiten Bereich (17) auf dem Rad (2a) und/oder eine dritte Messeinheit (18) für einen dritten Bereich (19) auf dem Rad (2a) umfasst.

3. System (1) nach Anspruch 1 oder 2, **dadurch gekennzeichnet,**
**dass** die erste Messeinheit (9) und die zweite Messeinheit (16) auf einer ersten Seite (31) der Schiene (4a) und die dritte Messeinheit (18) auf einer zweiten Seite (32) der Schiene (4a) angeordnet ist, insbesondere ist zweite Seite (32) die Innenseite der Schiene (4a).

4. System (1) nach einem der Ansprüche 1 bis 3, **dadurch gekennzeichnet, dass** der erste Systemteil (3a) derart eingerichtet ist, dass die Projektion und Erfassung gleichzeitig mindestens mit der ersten Messeinheit (9) und/oder mit der zweiten Messeinheit (16) und/oder mit der dritten Messeinheit (18) erfolgt.

5. System (1) nach einem der Ansprüche 1 bis 4, **dadurch gekennzeichnet, dass** die erste Messeinheit (9) und/oder die zweite Messeinheit (16) und/oder die dritte Messeinheit (18) mindestens eine weitere elektromagnetische Strahlungsquelle (28, 29, 30) aufweist, und dass mit der weiteren Strahlungsquelle (28, 29, 30) elektromagnestische Strahlung, bei der ersten Messeheit (9) in den ersten Bereich (13), bei der zweiten Messeinheit (16) in den zweiten Bereich (17) und bei der dritten Messeinheit (18) in den drittem Bereich (19), auf das Rad (2a) projizierbar ist.

6. System (1) nach einem der Ansprüche 1 bis 5, **dadurch gekennzeichnet, dass** mindestens eine Strahlungsquelle (10, 20, 23, 28, 29, 30) als Infrarotlaser ausgebildet ist.

7. System (1) nach einem der Ansprüche 1 bis 6, **dadurch gekennzeichnet, dass** der erste Systemteil (3a) mindestens eine Bremserfassungseinrichtung umfasst, und dass die Bremserfassungseinrichtung derart eingerichtet und ausgebildet ist, dass mindestens eine Bremsscheibe eines auf der Schiene (4a) angeordneten Schienenfahrzeuges erfassbar ist.

8. System (1) nach einem der Ansprüche 1 bis 7, **dadurch gekennzeichnet, dass** der erste Systemteil (3a) mindestens eine erste Auslöseeinrichtung (33) und eine zweite Auslöseeinrichtung (34) umfasst, dass die erste Auslöseeinheit (33) und die zweite Auslöseeinheit (34) auf das auf der Schiene (4a) angeordnete Rad (2a) ausgerichtet sind, und dass mit der erste Auslöseeinheit (33) und der zweite Auslöseeinheit (34) eine Projektion und Erfassung mit der ersten Messeinheit (9) und/oder der zweiten Messeinheit (16) und/oder der dritten Messeinheit (18) auslösbar ist.

9. System (1) nach einem der Ansprüche 1 bis 8, **dadurch gekennzeichnet, dass** ein zweiter Systemteil (3b) umfasst ist, dass der zweite Systemteil (3b) identisch zu ersten Systemteil (3a) ausgebildet ist, und dass der zweite Systemteil (3b) an der zweiten Schiene (4b) des Gleises (5) anordenbar ist.

10. Verfahren zur Ermittlung von Eigenschaften eines Rades (2) eines Schienenfahrzeuges, insbesondere mit einem System (1) nach einem der Ansprüche 1 bis 9, **gekennzeichnet durch** die folgenden Schritte:
- Projizieren (35) mindestens eines ersten mindestens zweidimensionalen Musters (12) in mindestens einen ersten Bereich (13) auf ein auf der Schiene (4a) angeordnetes erstes Rad (2a) mit einer ersten elektromagnetischen Strahlungsquelle (10),
- Erfassen (36) des ersten Musters (12) in dem ersten Bereich (13) mit mindestens einer ersten Erfassungseinrichtung (11) und Erzeugen (37) mindestens eines ersten Bilddatensatzes,
- Erfassen (40) und Erzeugen (41) eines zweiten Bilddatensatzes mit einer weiteren Erfassungseinrichtung (14) für den ersten Bereich (13),
- Berechnen (38) eines Modelldatensatzes unter Verwendung des ersten Bilddatensatzes und des zweiten Bilddatensatzes, wobei der Modelldatensatz als dreidimensionales, zumindest teilweises Modell des ersten Rades (2a) darstellbar ist.

11. Verfahren nach Anspruch 10, **dadurch gekennzeichnet,**
**dass** zusätzlich folgender Verfahrensschritt ausgeführt wird:
- Berechnen (39) eines Profildatensatzes unter Verwendung des Modelldatensatzes, wobei der Profildatensatz durch Transformation des Modelldatensatzes in eine Ebene berechnet wird, und wobei der Profildatensatz als zumindest teilweises, zweidimensionales Profil des ersten Rades (2a) darstellbar ist.

12. Verfahren nach Anspruch 11, **dadurch gekennzeichnet,**
**dass** der Profildatensatz mit mindestens einem in einer Datenbank gespeicherten weiteren Profildatensatz verglichen wird, und dass durch diesen Vergleich Veränderungen in den geometrischen Eigenschaften des Rades (2a) ermittelt werden.

13. Verfahren nach einem der Ansprüche 10 bis 12, **dadurch gekennzeichnet,**
**dass** mindestens folgende Verfahrensschritte umfasst sind:
- Projizieren (42) mindestens eines zweiten mindestens zweidimensionalen Musters (12a) in mindestens einen zweiten Bereich (17) auf ein auf der Schiene (4a) angeordnetes erstes Rad (2a) mit einer zweiten elektromagnetischen Strahlungsquelle (20),
- Erfassen (36) des zweiten Musters (12a) in dem zweiten Bereich (17) mit mindestens einer zweiten Erfassungseinrichtung (21) und Erzeugen (37) mindestens eines ersten Bilddatensatzes des zweiten Bereichs (17),
- Berechnen (38) des ersten Modelldatensatzes unter zusätzlicher Verwendung des ersten Bilddatensatzes des zweiten Bereichs (17).

14. Verfahren nach einem der Ansprüche 10 bis 13, **dadurch gekennzeichnet,**
**dass** mindestens folgende Verfahrensschritte umfasst sind:
- Projizieren (43) mindestens eines dritten mindestens zweidimensionalen Musters (12a) in mindestens einen dritten Bereich (19) auf ein auf einer Schiene (4a) angeordnetes erstes Rad (2a) mit einer dritten elektromagnetischen Strahlungsquelle (23),
- Erfassen (36) des dritten Musters (12b) in dem dritten Bereich (19) mit mindestens einer dritten Erfassungseinrichtung (24) und Erzeugen (37) mindestens eines ersten Bilddatensatzes des dritten Bereichs (19),
- Berechnen (38) des ersten Modelldatensatzes unter Verwendung des ersten Bilddatensatzes des dritten Bereichs (19), wobei der Modelldatensatz als dreidimensionales, zumindest teilweises Modell des ersten Rades (2a) darstellbar ist.

15. Verfahren nach einem der Ansprüche 10 bis 14, **dadurch gekennzeichnet,**
**dass** mindestens folgende Verfahrensschritte umfasst sind:
- Erfassen (40) und Erzeugen (41) eines zweiten Bilddatensatzes mit einer weiteren Erfassungseinrichtung (22, 25) für den zweiten Bereich (17) und/oder für den dritten Bereich (19), und Berechnen (38) des ersten Modelldatensatzes mit den zweiten Bilddatensätzen.

## Claims

1. System (1) for establishing properties of at least one wheel (2a) of a rail vehicle, comprising at least one first system part (3a), wherein the first system part (3a) is arrangeable at at least one rail (4a) of a track (5), wherein the first system part (3a) comprises at least one first measurement unit (9), wherein the first measurement unit (9) comprises at least one first electromagnetic radiation source (10) and at least one first detection device (11), wherein the first radiation source (10) is formed and configured in such a way that a first pattern (12) is projectable in at least one first region (13) on the wheel (2a), arranged on the rail (4a), of a rail vehicle by means of the first radiation source (10), wherein the first detection device (11) is formed and configured in such a way that the first pattern (12) is detectable in the first region (13) on the wheel (2) by means of the first detection device (11) and wherein the first pattern (12) is an at least two-dimensional pattern,
**characterized**
**in that** the first measurement unit (9) comprises a second detection device (14) and in that the second detection device (14) is formed and configured in such a way that the first pattern (12) in the first region (13) on the wheel (2) is detectable by means of the second detection device (14).

2. System (1) according to Claim 1, **characterized**
**in that** the first system part (3a) comprises a second measurement unit (16) for a second region (17) on the wheel (2a) and/or a third measurement unit (18) for a third region (19) on the wheel (2a).

3. System (1) according to Claim 1 or 2, **characterized**
**in that** the first measurement unit (9) and the second measurement unit (16) are arranged on a first side (31) of the rail (4a) and the third measurement unit (18) is arranged on a second side (32) of the rail (4a); in particular, the second side (32) is the inner side of the rail (4a).

4. System (1) according to any one of Claims 1 to 3, **characterized**
**in that** the first system part (3a) is configured in such a way that the projection and detection are implemented at the same time, at least with the first measurement unit (9) and/or with the second measurement unit (16) and/or with the third measurement unit (18).

5. System (1) according to any one of Claims 1 to 4, **characterized**
**in that** the first measurement unit (9) and/or the second measurement unit (16) and/or the third measurement unit (18) comprise at least one further electromagnetic radiation source (28, 29, 30) and in that electromagnetic radiation is projectable onto the wheel (2a) by the further radiation source (28, 29, 30), into the first region (13) in the case of the first measurement unit (9), into the second region (17) in the case of the second measurement unit (16) and into the third region (19) in the case of the third measurement unit (18).

6. System (1) according to any one of Claims 1 to 5, **characterized**
**in that** at least one radiation source (10, 20, 23, 28, 29, 30) is formed as an infrared laser.

7. System (1) according to any one of Claims 1 to 6, **characterized**
**in that** the first system part (3a) comprises at least one braking detection device and in that the braking detection device is configured and formed in such a way that at least one brake disc of a rail vehicle arranged on the rail (4a) is detectable.

8. System (1) according to any one of Claims 1 to 7, **characterized**
**in that** the first system part (3a) comprises at least one first trigger device (33) and one second trigger device (34), in that the first trigger unit (33) and the second trigger unit (34) are directed to the wheel (2a) arranged on the rail (4a) and in that a projection and detection with the first measurement unit (9) and/or the second measurement unit (16) and/or the third measurement unit (18) is triggerable by the first trigger unit (33) and the second trigger unit (34).

9. System (1) according to any one of Claims 1 to 8, **characterized**
**in that** a second system part (3b) is comprised, in that the second system part (3b) has an identical form to the first system part (3a) and in that the second system part (3b) is arrangeable at the second rail (4b) of the track (5).

10. Method for establishing properties of a wheel (2) of a rail vehicle, in particular using a system (1) according to any one of Claims 1 to 9, **characterized by** the following steps:
- projecting (35) at least one first at least two-dimensional pattern (12) in at least one first region (13) on a first wheel (2a) arranged on the rail (4a) using a first electromagnetic radiation source (10),
- detecting (36) the first pattern (12) in the first region (13) by at least one first detection device (11) and producing (37) at least one first image data record,
- detecting (40) and producing (41) a second image data record with a further detection device (14) for the first region (13),
- calculating (38) a model data record using the first image data record and the second image data record, wherein the model data record is representable as a three-dimensional, at least partial model of the first wheel (2a).

11. Method according to Claim 10, **characterized**
**in that**, additionally, the following method step is carried out:
- calculating (39) a profile data record using the model data record, wherein the profile data record is calculated by transforming the model data record into a plane and wherein the profile data record is representable as a at least partial, two-dimensional profile of the first wheel (2a).

12. Method according to Claim 11, **characterized**
**in that** the profile data record is compared to at least one further profile data record that is stored in a database and in that changes in the geometric properties of the wheel (2a) are established on the basis of this comparison.

13. Method according to any one of Claims 10 to 12, **characterized**
**in that** at least the following method steps are comprised:
- projecting (42) at least one second at least two-dimensional pattern (12a) in at least one second region (17) on a first wheel (2a) arranged on the rail (4a) using a second electromagnetic radiation source (20),
- detecting (36) the second pattern (12a) in the second region (17) by at least one second detection device (21) and producing (37) at least one first image data record of the second region (17),
- calculating (38) the first model data record with additional use of the first image data record of the second region (17).

14. Method according to any one of Claims 10 to 13, **characterized**
**in that** at least the following method steps are comprised:
- projecting (43) at least one third at least two-dimensional pattern (12a) in at least one third region (19) on a first wheel (2a) arranged on the rail (4a) using a third electromagnetic radiation source (23),
- detecting (36) the third pattern (12b) in the third region (19) by at least one third detection device (24) and producing (37) at least one first image data record of the third region (19),
- calculating (38) the first model data record using the first image data record of the third region (19), wherein the model data record is representable as a three-dimensional, at least partial model of the first wheel (2a).

15. Method according to any one of Claims 10 to 14, **characterized**
**in that** at least the following method steps are comprised:
- detecting (40) and producing (41) a second image data record using a further detection device (22, 25) for the second region (17) and/or for the third region (19) and calculating (38) the first model data record using the second image data records.

## Revendications

1. Système (1) servant à déterminer des propriétés d'au moins une roue (2a) d'un véhicule sur rails, avec au moins une première partie de système (3a), dans lequel la première partie de système (3a) peut être disposée au niveau d'au moins un rail (4a) d'une voie (5), dans lequel la première partie de système (3a) comprend au moins une première unité de mesure (9), dans lequel la première unité de mesure (9) présente au moins une première source de rayonnement (10) électromagnétique et au moins un premier dispositif de détection (11), dans lequel la première source de rayonnement (10) est réalisée et mise au point de telle manière qu'un premier motif (12) peut être projeté, avec la première source de rayonnement (10), dans au moins une première zone (13) sur la roue (2a), disposée sur le rail (4a), d'un véhicule sur rails, dans lequel le premier dispositif de détection (11) est réalisé et mis au point de telle manière que le premier motif (12) peut être détecté, avec le premier dispositif de détection (11), dans la première zone (13) sur la roue (2), et dans lequel le premier motif (12) est un motif au moins bidimensionnel,
**caractérisé en ce**
**que** la première unité de mesure (9) comprend un deuxième dispositif de détection (14), et que le deuxième dispositif de détection (14) est réalisé et mis au point de telle manière que le premier motif (12) peut être détecté, avec le deuxième dispositif de détection (14), dans la première zone (13) sur la roue (2).

2. Système (1) selon la revendication 1, **caractérisé en ce**
**que** la première partie de système (3a) comprend une deuxième unité de mesure (16) pour une deuxième zone (17) sur la roue (2a) et/ou une troisième unité de mesure (18) pour une troisième zone (19) sur la roue (2a).

3. Système (1) selon la revendication 1 ou 2, **caractérisé en ce**
**que** la première unité de mesure (9) et la deuxième unité de mesure (16) sont disposées sur un premier côté (31) du rail (4a) et la troisième unité de mesure (18) est disposée sur un deuxième côté (32) du rail (4a), en particulier le deuxième côté (32) est le côté intérieur du rail (4a).

4. Système (1) selon l'une quelconque des revendications 1 à 3, **caractérisé en ce que** la première partie de système (3a) est mise au point de telle manière que la projection et la détection sont effectuées de manière simultanée au moins avec la première unité de mesure (9) et/ou avec la deuxième unité de mesure (16) et/ou avec la troisième unité de mesure (18).

5. Système (1) selon l'une quelconque des revendications 1 à 4, **caractérisé en ce que** la première unité de mesure (9) et/ou la deuxième unité de mesure (16) et/ou la troisième unité de mesure (18) présentent au moins une autre source de rayonnement (28, 29, 30) électromagnétique, et qu'un rayonnement électromagnétique peut être projeté sur la roue (2a) avec l'autre source de rayonnement (28, 29, 30), dans la première zone (13) dans le cas de la première unité de mesure (9), dans la deuxième zone (17) dans le cas de la deuxième unité de mesure (16) et dans la troisième zone (19) dans le cas de la troisième unité de mesure (18).

6. Système (1) selon l'une quelconque des revendications 1 à 5, **caractérisé en ce qu'**au moins une source de rayonnement (10, 20, 23, 28, 29, 30) est réalisée sous la forme d'un laser infrarouge.

7. Système (1) selon l'une quelconque des revendications 1 à 6, **caractérisé en ce que** la première partie de système (3a) comprend au moins un dispositif de détection de frein, et que le dispositif de détection de frein est mis au point et réalisé de telle manière qu'au moins un disque de frein d'un véhicule sur rails disposé sur le rail (4a) peut être détecté.

8. Système (1) selon l'une quelconque des revendications 1 à 7, **caractérisé en ce**
**que** la première partie de système (3a) comprend au moins un premier système de déclenchement (33) et un deuxième système de déclenchement (34), que la première unité de déclenchement (33) et la deuxième unité de déclenchement (34) sont orientées sur la roue (2a) disposée sur le rail (4a), et qu'une projection et une détection avec la première unité de mesure (9) et/ou la deuxième unité de mesure (16) et/ou la troisième unité de mesure (18) peuvent être déclenchées avec la première unité de déclenchement (33) et la deuxième unité de déclenchement (34).

9. Système (1) selon l'une quelconque des revendications 1 à 8, **caractérisé en ce qu'**une deuxième partie de système (3b) est comprise, que la deuxième partie de système (3b) est réalisée de manière identique à la première partie de système (3a), et que la deuxième partie de système (3b) peut être disposée au niveau du deuxième rail (4b) de la voie (5).

10. Procédé servant à déterminer des propriétés d'une roue (2) d'un véhicule sur rails, en particulier avec un système (1) selon l'une quelconque des revendications 1 à 9, **caractérisé par** les étapes suivantes :
- la projection (35) d'au moins un premier motif (12) au moins bidimensionnel dans au moins une première zone (13) sur une première roue (2a) disposée sur le rail (4a) avec une première source de rayonnement (10) électromagnétique,
- la détection (36) du premier motif (12) dans la première zone (13) avec au moins un premier dispositif de détection (11) et la génération (37) d'au moins un premier jeu de données d'images,
- la détection (40) et la génération (41) d'un deuxième jeu de données d'images avec un autre dispositif de détection (14) pour la première zone (13),
- le calcul (38) d'un jeu de données de modèle en utilisant le premier jeu de données d'images et le deuxième jeu de données d'image, dans lequel le jeu de données de modèle peut être représenté sous la forme d'un modèle tridimensionnel au moins partiel de la première roue (2a).

11. Procédé selon la revendication 10, **caractérisé en ce qu'**est réalisée en outre l'étape de procédé suivante :
- le calcul (39) d'un jeu de données de profil en utilisant le jeu de données de modèle, dans lequel le jeu de données de profil est calculé par transformation du jeu de données de modèle dans un plan, et dans lequel le jeu de données de profil peut être représenté sous la forme d'un profil au moins partiel, bidimensionnel de la première roue (2a).

12. Procédé selon la revendication 11, **caractérisé en ce**
**que** le jeu de données de profil est comparé à au moins un autre jeu de données de profil mémorisé dans une base de données, et que des modifications dans les propriétés géométriques de la roue (2a) sont déterminées par ladite comparaison.

13. Procédé selon l'une quelconque des revendications 10 à 12, **caractérisé en ce**
**qu'**au moins les étapes de procédé suivantes sont comprises :
- la projection (42) d'au moins un deuxième motif (12a) au moins bidimensionnel dans au moins une deuxième zone (17) sur une première roue (2a) disposée sur le rail (4a) avec une deuxième source de rayonnement (20) électromagnétique,
- la détection (36) du deuxième motif (12a) dans la deuxième zone (17) avec au moins un deuxième dispositif de détection (21) et la génération (37) d'au moins un premier jeu de données d'images de la deuxième zone (17),
- le calcul (38) du premier jeu de données de modèle en utilisant en outre le premier jeu de données d'images de la deuxième zone (17).

14. Procédé selon l'une quelconque des revendications 10 à 13, **caractérisé en ce**
**qu'**au moins les étapes de procédé suivantes sont comprises :
- la projection (43) d'au moins un troisième motif (12a) au moins bidimensionnel dans au moins une troisième zone (19) sur une première roue (2a) disposée sur le rail (4a) avec une troisième source de rayonnement (23) électromagnétique,
- la détection (36) du troisième motif (12b) dans la troisième zone (19) avec au moins un troisième dispositif de détection (24) et la génération (37) d'au moins un premier jeu de données d'images de la troisième zone (19),
- le calcul (38) du premier jeu de données de modèle en utilisant le premier jeu de données d'images de la troisième zone (19), dans lequel le jeu de données de modèle peut être représenté sous la forme d'un modèle tridimensionnel, au moins partiel de la première roue (2a).

15. Procédé selon l'une quelconque des revendications 10 à 14, **caractérisé en ce**
**qu'**au moins les étapes de procédé suivantes sont comprises :
- la détection (40) et la génération (41) d'un deuxième jeu de données d'images avec un autre dispositif de détection (22, 25) pour la deuxième zone (17) et/ou pour la troisième zone (19), et le calcul (38) du premier jeu de données de modèle avec les deuxièmes jeux de données d'images.
